# EUROPÄISCHE PATENTSCHRIFT

(11) **EP 4 262 480 B1**
(45) Veröffentlichungstag und Bekanntmachung des Hinweises auf die Patenterteilung: **17.07.2024**
(21) Anmeldenummer: 21835606.1
(22) Anmeldetag: 01.12.2021
(51) Int. Cl.: A47B 85/06, A47B 77/06, A47B 77/08, B60P 3/39, E03C 1/18, F24C 15/30

(54) **MULTIFUNKTIONSMÖBEL**
MULTIFUNCTIONAL PIECE OF FURNITURE
MEUBLE MULTIFONCTION

(30) Priorität: 18.12.2020 DE 102020134244
(43) Veröffentlichungstag der Anmeldung: 25.10.2023
(73) Patentinhaber: ChallengeIT GmbH, 50739 Köln (DE)
(72) Erfinder: KONNERTH, Jan-Michael, 50933 Köln (DE)
(74) Vertreter: Patentanwälte Bauer Vorberg Kayser
(86) Internationale Anmeldenummer: PCT/EP2021/083852
(87) Internationale Veröffentlichungsnummer: WO 2022/128483

(56) Entgegenhaltungen:
- CH-A- 174 594
- CH-A- 180 635
- DE-U1- 202019 103 922
- FR-A- 878 092
- JP-A- 2007 029 305
- JP-U- S51 110 850
- US-A- 2 867 711
- US-A1- 2005 049 056
- US-A1- 2005 104 294
- US-A1- 2008 227 557

## Beschreibung

Die Erfindung betrifft ein Multifunktionsmöbel mit einem Möbelkorpus zur Bereitstellung verschiedener, unterschiedlichen Gebrauchszwecken eines Nutzers dienenden Funktionen. Die Erfindung betrifft weiterhin ein Verfahren zur Nutzung verschiedener, unterschiedlichen Gebrauchszwecken eines Nutzers dienenden Funktionen eines Multifunktionsmöbels. Außerdem betrifft die Erfindung ein Fahrzeug, insbesondere ein bewohnbares Kraftfahrzeug.

Multifunktionsmöbel, die einem Nutzer mehrere, unterschiedlichen Gebrauchszwecken dienende Funktionen bereitstellen, sind an sich bekannt.

US 2005/104294 A1 offenbart zum Beispiel einen Spieltisch, der gedreht werden kann und drei Spielflächen aufweist. Der Spieltisch hat einen dreieckigen Querschnitt, der zentrisch auf einer Achse liegt. Es wird eine Dreifachnutzung des Spieltischs beschrieben, die auf denselben Funktionszweck "Spielen" ausgerichtet ist, d. h. auf Tischspiele, die alle die gleiche Spielflächengröße aufweisen.

Beispielsweise beschreibt AT 521492 A4 ein Möbelsystem mit einer um eine horizontale Drehachse drehbare Möbeleinheit, die ein Innenvolumen umschließt, in welchem an diametral gegenüberliegenden Innenwänden der Möbeleinheit sowohl eine Sitzvorrichtung als auch eine Liegevorrichtung angeordnet sind. Durch Drehen der Möbeleinheit kann wahlweise eine der beiden Vorrichtungen in eine untere Gebrauchsstellung gebracht werden, in welcher sie von einem Nutzer genutzt werden kann. Nachteilig bei dem beschriebenen Möbelsystems sind u. a. sein voluminöser und komplexer Aufbau.

Aus DE 10 2012 007 690 A1 ist weiterhin ein Kombinationsmöbel bekannt, das eine Bett- und Tischfunktion bereitstellt. Hierzu sind eine Liegeplatte und eine Tischplatte rechtwinklig zueinander zwischen zwei Seitenplatten angeordnet, so dass durch Kippen des Kombinationsmöbels um 90 ° entweder die Tischplatte oder die Liegeplatte in eine horizontale Gebrauchsstellung zur Nutzung durch einen Nutzer gebracht werden können. Die Handhabung des Kombinationsmöbels insbesondere hinsichtlich des Wechsels seiner Gebrauchsstellung erweist sich u. a. als kraft- und zeitaufwändig und ist somit verhältnismäßig unkomfortabel.

Vor diesem Hintergrund liegt der Erfindung die Aufgabe zugrunde, ein Multifunktionsmöbel zu schaffen, das mehrere, verschiedenen Gebrauchszwecken dienende Funktionen in besonders platzsparender Weise bereitstellt, so dass ein maximaler Nutzen aus einem vorgegebenen umbauten Raum gezogen werden kann. Das Multifunktionsmöbel soll dementsprechend eine möglichst geringe Grundfläche sowie ein möglichst geringes Volumen beanspruchen. Gleichzeitig sollen Wechsel zwischen unterschiedlichen Gebrauchsstellungen, in denen die verschiedenen Funktionen von einem Nutzer genutzt werden können, komfortabel, schnell und ohne großen Aufwand möglich sein. Ganz besonders sollen diese Wechsel für den Nutzer verletzungssicher durchführbar sein. Der Erfindung liegt weiterhin die Aufgabe zugrunde, ein Verfahren zur Nutzung verschiedener, unterschiedlichen Gebrauchszwecken eines Nutzers dienenden Funktionen eines Multifunktionsmöbels mit den vorbeschriebenen Vorteilen bereitzustellen sowie außerdem ein Fahrzeug, das wenigstens ebenfalls derartige Vorteile aufweist.

Diese Aufgabe wird durch ein Multifunktionsmöbel mit den Merkmalen des Anspruchs 1, durch ein Verfahren mit den Merkmalen des Anspruchs 14 sowie durch ein Fahrzeug mit den Merkmalen des Anspruchs 15 gelöst. Weitere, besonders vorteilhafte Ausgestaltungen der Erfindung offenbaren die jeweiligen Unteransprüche.

Es ist darauf hinzuweisen, dass die in den Ansprüchen einzeln aufgeführten Merkmale in beliebiger, technisch sinnvoller Weise miteinander kombiniert werden können (auch über Kategoriegrenzen, beispielsweise zwischen Verfahren und Vorrichtung, hinweg) und weitere Ausgestaltungen der Erfindung aufzeigen. Die Beschreibung charakterisiert und spezifiziert die Erfindung insbesondere im Zusammenhang mit den Figuren zusätzlich.

Es sei ferner darauf hingewiesen, dass ein hierin verwendetes, zwischen zwei Merkmalen stehendes und diese miteinander verknüpfendes "und/oder" stets so auszulegen ist, dass in einer ersten Ausgestaltung des erfindungsgemäßen Gegenstands lediglich das erste Merkmal vorhanden sein kann, in einer zweiten Ausgestaltung lediglich das zweite Merkmal vorhanden sein kann und in einer dritten Ausgestaltung sowohl das erste als auch das zweite Merkmal vorhanden sein können.

Außerdem soll der Begriff "etwa" hierin einen Toleranzbereich angeben, den der auf dem vorliegenden Gebiet tätige Fachmann als üblich ansieht. Insbesondere ist unter dem Begriff "etwa" ein Toleranzbereich der bezogenen Größe von bis maximal +/-20 %, bevorzugt bis maximal +/-10 % zu verstehen.

Im Sinne der vorliegenden Erfindung sind hierin nachstehend verwendete relative Begriffe bezüglich eines Merkmals wie beispielsweise "größer", "kleiner", "breiter", "schmaler", "höher", "niedriger", "schwerer", "leichter" und dergleichen stets so auszulegen, dass herstellungsbedingte Größenabweichungen des betreffenden Merkmals, die innerhalb der für die jeweilige Fertigung des betreffenden Merkmals definierten Fertigungstoleranzen liegen, nicht von dem jeweiligen relativen Begriff erfasst sind. Mit anderen Worten ist gemäß dieser Definition eine Größe eines Merkmals erst dann als im Sinne der vorliegenden Erfindung "größer", "kleiner", "breiter", "schmaler", "höher", "niedriger", "schwerer", "leichter" und dergleichen anzusehen als eine Größe eines Vergleichsmerkmals, wenn sich die beiden verglichenen Größen in ihrem Wert so deutlich voneinander unterscheiden, dass dieser Größenunterschied sicher nicht in den fertigungsbedingten Toleranzbereich des betreffenden Merkmals fällt, sondern das Ergebnis zielgerichteten Handelns ist.

Erfindungsgemäß weist ein Multifunktionsmöbel, insbesondere für einen Einbau in einem (bewohnbaren) Fahrzeug wie beispielsweise Reisemobil, Wohnmobil, Wohnwagen, Camping Van, Transporter, Bus, und dergleichen, ohne jedoch zwingend hierauf beschränkt zu sein, zur Bereitstellung verschiedener, unterschiedlichen Gebrauchszwecken eines Nutzers dienenden Funktionen einen Möbelkorpus mit einer Außenfläche auf. Als Möbelkorpus sind im Allgemeinen die tragenden Teile des Multifunktionsmöbels zu verstehen, so dass seine Außenfläche im Wesentlichen durch die außen liegenden Wandungsteile gebildet ist. Die Außenfläche kann als im Wesentlichen geschlossene Fläche ausgebildet sein, ohne jedoch zwingend hierauf beschränkt zu sein.

Weiterhin ist gemäß der Erfindung die Außenfläche des Möbelkorpus in wenigstens vier verschiedene, unterschiedlichen Gebrauchszwecken des Nutzers dienende Funktionsflächen eingeteilt, wobei jeder Funktionsfläche wenigstens eine vorbestimmte Gebrauchsstellung zugeordnet ist, in welcher die jeweilige Funktionsfläche entsprechend ihrem Gebrauchszweck von dem Nutzer bestimmungsgemäß nutzbar ist. Jede Funktionsfläche weist also seine eigene Gebrauchsstellung auf, damit die vorgesehene, bestimmungsgemäße Nutzung der Funktionsfläche durch den Nutzer erfolgen kann. Es ist zu verstehen, dass die Gebrauchsstellungen verschiedener Funktionsflächen verschieden sein können, in bestimmten Fällen aber auch dieselben sein können. So kann vorgesehen sein, dass beispielsweise bei der Bereitstellung von drei oder mehr verschiedenen Funktionsflächen zwei Funktionsflächen in ein und derselben Gebrauchsstellung durch den Nutzer bestimmungsgemäß nutzbar sind, ohne jedoch zwingend hierauf beschränkt zu sein.

Des Weiteren ist erfindungsgemäß wenigstens ein Aufhängungsmittel vorgesehen, das ausgebildet und angeordnet ist, eine Drehachse des Möbelkorpus festzulegen und den Möbelkorpus an einem Möbelaufstellort, z. B. einem Fahrzeuginnenraum des bereits erwähnten Fahrzeugs, beabstandet zu dem Möbelaufstellort, das heißt zu den Möbelaufstellort bildende Flächen wie z. B. ein Bodenfläche, eine Wandfläche, eine Deckenfläche und dergleichen, um die Drehachse in räumlich horizontaler Ausrichtung drehbar zu halten. Damit ist der Möbelkorpus mittels des Aufhängungsmittels grundsätzlich an seinem Aufstellort gegenüber diesem frei um die festgelegte, horizontal im Raum des Aufstellorts ausgerichtete Drehachse drehbar. Die verschiedenen Gebrauchsstellungen können somit unterschiedlichen Winkelpositionen des Möbelkorpus entsprechen. Als horizontale Ausrichtung im Sinne der Erfindung ist eine Richtung zu verstehen, die im Wesentlichen parallel zur Erdoberfläche bzw. im Wesentlichen rechtwinklig zur Richtung der örtlichen Schwerebeschleunigung verläuft. Eine lotrechte, das heißt eine der örtlichen Schwerebeschleunigung folgende Orientierung der Drehachse am Aufstellort führt jedenfalls nicht zu einem bestimmungs- und funktionsgemäßen Gebrauch des Multifunktionsmöbels.

Das erfindungsgemäße Multifunktionsmöbel stellt somit mehrere, verschiedenen Gebrauchszwecken dienende Funktionen, bevorzugt wenigstens vier oder noch mehr, in platzsparender Weise bereit, indem lediglich eine Fläche am Aufstellort, die der Grundfläche des Möbelkorpus entsprechen muss, und ein Raumvolumen am Aufstellort zur Verfügung stehen müssen, das im Wesentlichen dem Volumen des Multifunktionsmöbels plus einem für die bestimmungsgemäße Nutzung des Multifunktionsmöbels durch den Nutzer benötigtes Nutzungsvolumen entspricht.

Die Drehbarkeit des Möbelkorpus am Aufstellort ermöglicht es, einen maximalen Nutzen aus einem vorgegebenen umbauten Raum des Möbelaufstellorts zu ziehen, indem die Grundfläche/das Raumvolumens am Aufstellort vorteilhaft mehrfach genutzt werden kann. Die einzelnen Funktionsflächen können von dem Nutzer zudem in komfortabler Weise, ohne großen Zeitaufwand und ohne große Anstrengung sicher in ihre jeweiligen Gebrauchsstellungen gebracht werden, in denen sie von dem Nutzer bestimmungsgemäße genutzt werden können. Da der Möbelkorpus am Aufstellort durch das Aufhängungsmittel stets sicher gehalten ist, ist ein Verletzungsrisiko des Nutzers infolge einer unkontrollierten Bewegung des Möbelkorpus praktisch vollständig ausgeschlossen, zumindest in maximaler Weise reduziert im Vergleich zu einem Möbelstück, das beispielsweise von dem Nutzer auf einer Bodenfläche umgekippt werden muss, um die verschiedenen Funktionsflächen zugänglich zu machen.

Gemäß der Erfindung ist der jeweilige Gebrauchszweck der Funktionsflächen ausgewählt aus der Gruppe enthaltend Arbeiten, Kochen, Verstauen, Schlafen, wobei die Funktionsfläche mit dem Gebrauchszweck "Arbeiten" dem Nutzer wenigstens eine ebene Arbeitsfläche (z. B. Schreibfläche) bereitstellt, die Funktionsfläche mit dem Gebrauchszweck "Kochen" dem Nutzer wenigstens eine Kochstelle (z. B. Elektro- oder Gasherd) zum Erwärmen von Nahrungsmitteln bereitstellt, die Funktionsfläche mit dem Gebrauchszweck "Verstauen" dem Nutzer wenigstens einen Stauraum zur Aufbewahrung von Gegenständen bereitstellt und die Funktionsfläche mit dem Gebrauchszweck "Schlafen" dem Nutzer wenigstens eine Liegefläche bereitstellt.

Die Erfindung sieht weiter vor, dass die der Funktionsfläche mit dem Gebrauchszweck "Kochen" zugeordnete Gebrauchsstellung der der Funktionsfläche mit dem Gebrauchszweck "Verstauen" zugeordneten Gebrauchsstellung entspricht. Das heißt, beide Funktionsflächen sind gleichzeitig nutzbar. Zum Beispiel bildet die Funktionsfläche mit dem Gebrauchszweck "Kochen" in dieser Gebrauchsstellung eine Oberseite des Möbelkorpus und die Funktionsfläche mit dem Gebrauchszweck "Verstauen" bildet eine Vorderseite des Möbelkorpus. Der Nutzer kann den beim Kochen zugänglichen Stauraum in vorteilhafter Weise zur Unterbringung von Küchenutensilien und/oder Lebensmitteln nutzen.

Das erfindungsgemäße Multifunktionsmöbel eignet sich folglich besonders zur Verwendung an bewohnbaren Aufstellorten, die naturgemäß durch ein verhältnismäßig geringes Platzangebot gekennzeichnet sind, wie beispielsweise in Reisemobilen, Wohnmobilen, Wohnwagen, Camping Vans, Transportern, Reisebussen und dergleichen, ebenso in Zügen, Booten, Schiffen, Flugzeugen oder auch an stationären Aufstellorten wie in Ferienapartments, Hotelzimmern, Wohnungen mit lediglich einem oder zwei Zimmern etc.

Die Drehung des Möbelkorpus um die am Aufstellort im Wesentlichen räumlich horizontal ausgerichtet gehaltene Drehachse kann in einfachster Weise durch Muskelkraft erfolgen, indem der Nutzer den Möbelkorpus zum Beispiel mit seiner Hand dreht. Hierzu kann beispielsweise ein Antriebsmittel in Ausgestaltung einer an der Drehachse angeordneten Handkurbel vorgesehen sein.

Alternativ oder zusätzlich kann die Drehung des Möbelkorpus auch mit Hilfe eines vorgesehenen Elektromotors durchführbar sein.

Für eine gleichmäßige Drehbewegung des Möbelkorpus, die insbesondere bei einem Handbetrieb hinsichtlich der Beanspruchung sowie des Nutzungskomforts besonders vorteilhaft ist, verläuft die durch das wenigstens eine Aufhängungsmittel festgelegte (gedachte) Drehachse innerhalb des Möbelkorpus derart, dass die bei einer vollständigen Drehung um 360 ° vom Möbelkorpus bezüglich der Drehachse bewirkten Drehmomente insgesamt minimiert und ausgeglichen sind. Das bzw. die Aufhängungsmittel können unter Berücksichtigung des konkreten Aufbaus des Möbelkorpus sowie der an seiner Außenfläche bereitgestellten Funktionsflächen, die mit unterschiedlichen Bauteilen, Funktionskomponenten, Gerätschaften und dergleichen (d. h. unterschiedlich in Anzahl und Gewicht) zur Bereitstellung der gewünschten Funktion versehen sein können, entsprechend am Möbelkorpus platziert sein.

Eine besonders vorteilhafte Ausgestaltung der Erfindung sieht vor, dass der Möbelkorpus im Wesentlichen in Form eines Prismas ausgebildet ist, wobei das Prisma allgemein eine Grundfläche, eine gegenüberliegende Deckfläche und mit eine die Grundfläche mit der Deckfläche verbindenden Mantelfläche aufweist. Die Mantelfläche des Prismas entspricht hierbei der Außenfläche des Möbelkorpus, die im Wesentlichen als geschlossen angesehen werden kann. Entsprechend bilden die Grundfläche und die gegenüberliegende Deckfläche des Prismas die jeweils endseitigen Stirnflächen des Möbelkorpus.

Mit anderen Worten ist der Möbelkorpus in der vorliegenden Ausgestaltung im Wesentlichen als geometrischer (prismatischer) Körper ausgebildet, der durch Parallelverschiebung eines die Grundfläche beschreibenden, ebenen Polygons entlang einer nicht in der Grundfläche liegenden Geraden im Raum entsteht. Die Grundfläche und die Deckfläche sind zueinander kongruent und parallel. Der Abstand zwischen der Grundfläche und der Deckfläche (beim vorliegenden Möbelkorpus also die Stirnflächen) wird bekanntlich als Höhe des Prismas bezeichnet, wobei hierin synonym für die Höhe des Prismas auch der Begriff "Länge" des Möbelkorpus verwendet wird. Der im Wesentlichen nach Art eines Prismas ausgebildete Möbelkorpus weist folglich einen hochsymmetrischen Aufbau auf, der einer gleichmäßigen Drehbarkeit des Möbelkorpus um die Drehachse mit über den vollen Drehumfang ausgeglichenen Drehmomenten besonders zugutekommt.

Die Länge des Möbelkorpus beträgt bevorzugt z. B. zwischen 180 cm und 220 cm, ohne jedoch zwingend hierauf beschränkt zu sein. Die Länge kann je nach konkretem Einsatzzweck auch kleiner als 180 cm sein, wobei eine minimale Länge bevorzugt wenigstens 60 cm beträgt. Die Länge des Möbelkorpus kann auch größer als 220 cm sein, zum Beispiel bis 300 cm. Es hat sich allerdings gezeigt, dass eine maximale Länge von etwa 220 cm bis etwa maximal 240 cm hinsichtlich einer gleichmäßig erzielbaren Drehbarkeit des Möbelkorpus vorteilhaft und somit besonders bevorzugt ist, insbesondere auch bei durch Muskelkraft bewirkter Drehung des Möbelkorpus.

In einer weiteren vorteilhaften Ausgestaltung der Erfindung sind die Grundfläche und Deckfläche des prismatischen Möbelkorpus in Form eines Polygons mit jeweils drei oder vier Ecken ausgebildet. Dementsprechend weist die Mantel- bzw. Außenfläche des Möbelkorpus naturgemäß wenigstens drei bzw. vier zueinander geneigte und somit voneinander abgegrenzte, unterteilte Flächen auf, die als die verschiedenen Funktionsflächen dienen können. Der einfache geometrische Aufbau des Möbelkorpus gemäß der vorliegenden Ausgestaltung ermöglicht u. a. eine kostengünstige Herstellung sowie einen einfachen Zusammenbau.

Gemäß einer anderen bevorzugten Fortbildung des erfindungsgemäßen Gegenstands sind die Grundfläche und die Deckfläche des prismatisch ausgebildeten Möbelkorpus in Form eines Polygons mit jeweils sechs Ecken oder acht Ecken ausgebildet. Mit anderen Worten ist die Anzahl der Ecken des Polygonzugs der vorliegenden Ausgestaltung gegenüber dem vorstehend beschriebenen drei- bzw. viereckigen Polygonzug jeweils verdoppelt. Vorliegend sind die Ecken jedoch nicht äquidistant zueinander beabstandet entlang des Polygonzugs verteilt angeordnet, sondern das sechseckige und das achteckige Polygon weisen jeweils drei bzw. vier gleichlange Seiten einer ersten Länge und drei bzw. vier gleichlange Seiten einer zweiten Länge kleiner als die erste Länge auf. Die erste, längere Länge des Grundflächen- und Deckflächenpolygons bestimmt hierbei zusammen mit der Länge des Möbelkorpus die Nutzfläche der jeweiligen Funktionsfläche, womit die vorliegende Ausgestaltung des Möbelkorpus ebenfalls insgesamt drei Funktionsflächen aufweist. Die zweite, kürzere Länge des Grundflächen- und Deckflächenpolygons stellt im Wesentlichen einen abgeschrägten Übergang von einer Funktionsfläche zur nächsten Funktionsfläche bereit. Durch die Abschrägung wird die Nutzfläche der Funktionsflächen zwar geringfügig gegenüber einer Ausgestaltung mit unmittelbar aneinander angrenzenden Funktionsflächen ohne abgeschrägte Zwischenfläche verkleinert, jedoch vorteilhafterweise ebenso der für die Drehung des Möbelkorpus zu berücksichtigende maximale Radius bzw. Durchmesser. Der Möbelkorpus baut kompakter und erfordert ein noch kleineres Volumen am Aufstellort. Zudem werden spitzzulaufende Stoßkanten beim Möbelkorpus gemäß dieser Ausgestaltung vollständig vermieden, was neben einem Komfortgewinn für den Nutzer nicht zuletzt auch ein optisch ansprechenderes Design des Möbelkorpus ermöglicht.

Nach einer weiteren vorteilhaften Ausgestaltung der Erfindung weist das Aufhängungsmittel in Richtung der Drehachse eine Durchgangsöffnung auf, die zur Durchleitung wenigstens einer Versorgungsleitung für Strom-, Gas- und/oder Wasser in den Möbelkorpus eingerichtet ist. Damit erfüllt das Aufhängungsmittel neben der Festlegung der Drehachse sowie der drehbaren Halterung des Möbelkorpus am Aufstellort die Funktion, den Funktionsflächen eine Strom-, Wasser- oder Gasversorgung zuzuführen, um beispielsweise elektrische Geräte betreiben zu können, eine Waschfunktion (Wasser) und/oder eine Erwärmungsfunktion (Gas) bereitstellen zu können. Das Aufhängungsmittel kann zur Gewährleistung der Drehbarkeit des Möbelkorpus trotz stationärer Zuführung der Versorgungsleitungen von bzw. nach außen entsprechende Drehkupplungen bereitstellen. Diese können ausgebildet sein, Strom, Gas, Wasser und dergleichen sicher bzw. fluiddicht von außen in den Möbelkorpus einzuleiten bzw. aus diesem herauszuführen (z. B. Brauchwasser). Es ist denkbar, die Zuführung von mehreren Versorgungsleitungen über lediglich eine einzige Drehkupplung bereitzustellen, indem die mehreren Versorgungsleitungen konzentrisch an der Drehkupplung angeordnet sind. Beispielsweise könnte eine innenliegende Frischwasserzuleitung vorgesehen sein, die radial weiter außen von einer Brauchwasserabführleitung konzentrisch umgeben ist (oder umgekehrt). Noch weiter außen kann ferner zum Beispiel eine Stromübertragung vorgesehen sein, ohne jedoch zwingend auf die vorgenannte Reihenfolge oder Anzahl beschränkt zu sein.

Eine vorteilhafte Weiterbildung des Erfindungsgegenstands sieht vor, dass das Aufhängungsmittel als an zwei gegenüberliegenden Stirnflächen des Möbelkorpus jeweils vorgesehene Wellenstücke oder als eine zwischen den zwei gegenüberliegenden Stirnflächen des Möbelkorpus verlaufende Welle ausgebildet ist. Die Wellenstücke bzw. die Welle sind als längliche zylinderförmige Maschinenelemente zu verstehen, die ebenfalls zur Übertragung von Drehbewegungen und Drehmomenten dienen. Über die Ausrichtung der Zylinderachse der Wellenstücke bzw. der Welle ist die Drehachse des Möbelkorpus festgelegt. Die Wellenstücke bzw. die Welle kann/können aus einem Vollmaterial gebildet sein oder als Hohlwellen ausgebildet sein. Jedenfalls kann die zur Drehung des Möbelkorpus erforderliche Drehkraft von außen durch Muskel- oder Motorkraft in die Welle eingeleitet und über diese auf den Möbelkorpus übertragen werden, sofern dieser drehfest mit der Welle bzw. den Wellenstücken verbunden ist. Im Fall eines prismatisch ausgebildeten Möbelkorpus entsprechen die Stirnflächen der Grund- und Deckfläche des Prismas, wie bereits erläutert wurde.

Der Einfachheit halber wird im Folgenden lediglich von "Welle" gesprochen werden, wobei der Begriff "Welle" sowohl die Wellenstücke als auch die gesamte sich zwischen beiden Stirnflächen erstreckende Welle umfassen soll, sofern nicht ausdrücklich etwas anderes bestimmt ist.

Besonders bevorzugt weist die Welle (damit auch wenigstens eines der Wellenstücke, bevorzugt beide) nach einer weiteren Ausgestaltung eine in Richtung der Drehachse verlaufende Durchgangsöffnung auf, wie bereits an anderer Stelle hierin allgemein am Beispiel des Aufhängungsmittels erläutert wurde. Mit anderen Worten ist die Welle vorliegend zumindest eingangs- und/oder ausgangsseitig als Hohlwelle ausgebildet. Durch den Wellenhohlraum können entsprechende Versorgungsleitungen (z. B. Strom, Gas, Wasser etc.) in den Möbelkorpus bzw. aus diesem herausgeführt werden. Entsprechende Drehkupplungen zur sicheren und/oder fluiddichten Mediendurchleitung können in einem solchen Fall vorgesehen sein, um die stationären Zuleitungen von außen an den drehbaren Möbelkorpus anzuschließen. Es ist anzumerken, dass die Ausbildung der Welle als Hohlwelle nicht zwingend an die Durchführung von Versorgungsleitungen gekoppelt ist. Die Welle kann auch ohne Anschluss von Versorgungsleitungen vorteilhaft als Hohlwelle ausgebildet sein, um zum Beispiel das Gewicht des Multifunktionsmöbels zu verringern.

Allgemein ist bezüglich der Drehkupplung anzumerken, dass eine solche beispielsweise zur Stromübertragung beispielsweise über Schleifkontakte an den sich relativ zueinander drehenden Kupplungsteilen realisiert sein kann. Alternativ lässt sich die drehbare Stromübertragung vorteilhaft auch auf dem Weg einer induktiven Energieübertragung bereitstellen, die aufgrund ihrer Berührungsfreiheit der sich relativ zueinander drehenden Kupplungsteile besonders verschleißarm bzw. verschleißfrei und folglich wartungsfrei ist.

Auch können über eine einzige Drehkupplung mehrere Versorgungsleitungen geführt sein, indem diese konzentrisch an der Drehkupplung angeordnet sind. Beispielsweise könnte eine innenliegende Frischwasserzuleitung vorgesehen sein, die radial weiter außen von einer Brauchwasserabführleitung konzentrisch umgeben ist (oder umgekehrt). Noch weiter außen kann außerdem zum Beispiel eine Stromübertragung von der Drehkupplung vorgesehen sein, ohne jedoch zwingend auf die vorgenannte Reihenfolge oder Anzahl beschränkt zu sein.

Für einen konstruktiv einfach zu realisierenden Drehantrieb des Möbelkorpus ist dieser nach einer weiteren bevorzugten Ausgestaltung drehfest mit den Wellenstücken bzw. der Welle verbunden. Dementsprechend ist die Welle am Möbelaufstellort drehbar lagerbar, so dass eine Drehung der Welle die Drehbewegung des Möbelkorpus bewirkt.

Die Erfindung ist allerdings nicht auf die vorbeschriebene Art des Drehantriebs beschränkt. Es ist denkbar, anstelle der Welle eine starre Achse bzw. endseitig Achsstücke bereitzustellen, auf welcher bzw. welchen der Möbelkorpus drehbar gelagert ist. Die Achse selbst dient in diesem Fall nicht der Übertragung von Drehmomenten, sondern lediglich der ortsfesten Halterung des Möbelkörpers am Aufstellort, an dem die Achse bzw. Achsenstücke dann fest (zumindest drehfest) eingespannt sein können.

In einer Weiterbildung des Erfindungsgegenstands ist wenigstens eine Haltestütze vorgesehen, die ausgebildet und angeordnet ist, das Aufhängungsmittel drehbar oder drehfest aufzunehmen und am Möbelaufstellort ortsfest und in dem vorbestimmten Abstand zu diesem zu halten. Die Haltestütze, die z. B. in Form eines auf einer Bodenfläche des Aufstellorts stellbaren bzw. befestigbaren Standbocks, Standbeins und dergleichen ausgebildet sein, kann ein Bestandteil des Aufhängungsmittels und damit eine Komponente des Multifunktionsmöbels sein, ohne jedoch zwingend hierauf beschränkt zu sein. Beispielsweise kann die Haltestütze funktionsgemäß auch von einem Teil des Aufstellorts, zum Beispiel einer Wand oder Decke, bereitgestellt sein. In einem solchen Fall weist das Multifunktionsmöbel keine derartige Haltestütze auf, da die Abstands- und Stützfunktion bereits vollständig vom Möbelaufstellort bereitgestellt ist.

Weiterhin kann in einer anderen Ausgestaltung der Erfindung eine Fixiervorrichtung vorgesehen sein, die die Drehung des Möbelkorpus wahlweise freigibt oder unterbindet. Der Möbelkorpus ist mittels der Fixiervorrichtung hierbei zumindest in den einzelnen Gebrauchsstellungen der verschiedenen Funktionsflächen fixierbar, um eine sichere Nutzung der jeweiligen Funktionsflächen zu gewährleisten. Die Fixierung kann beispielsweise durch eine Verrastung, Klemmung und dergleichen erfolgen oder bei einem elektromotorisch vorgesehenen Drehantrieb vom Elektromotor selbst und/oder einem für den Drehantrieb möglicherweise vorgesehenen Getriebe bewirkt werden (z. B. durch Selbsthemmung).

Gemäß einer vorteilhaften Weiterbildung des erfindungsgemäßen Gegenstands gibt die Fixiervorrichtung die Drehung des Möbelkorpus stets nur in eine vorbestimmte Drehrichtung frei. Dies ist u. a. bei der Versorgung des Möbelkorpus mit einem flüssigen Medium (z. B. Wasser) von besonderem Vorteil, da auf diese Weise die Kontrolle über das bei der Drehung des Möbelkorpus zwangsläufig fließende Medium verbessert werden kann. Zum Beispiel kann ein in einem Abfluss einer Spüle befindliches Brauchwasser auf diese Weise daran gehindert werden, bei einer Drehung des Möbelkorpus in die durch die Fixiervorrichtung vorliegend unterbundene Drehrichtung unkontrolliert aus dem Abfluss herauszufließen.

Nach einer bevorzugten Weiterbildung des Erfindungsgegenstands ist der Stauraum innerhalb des Möbelkorpus durch eine parallel zur Drehachse verlaufende, drehbar am Möbelkorpus gehaltene Röhre gebildet. Es versteht sich, dass die Röhre sowie der Möbelkorpus entsprechende Stauraumöffnungen aufweisen, um die Gegenstände in die Röhre einlegen und wieder herausnehmen zu können. Die drehbare Lagerung der Röhre am Möbelkorpus hat den wesentlichen Vorteil, dass sich die Lage der Stauraumröhre bei einer Drehung des Möbelkorpus für den Nutzer nicht verändert. Die Röhre dreht sich lediglich relativ zum Möbelkorpus um denselben Winkel, den der Möbelkorpus gedreht wird. Damit werden die in der Stauraumröhre abgelegten Gegenstände trotz Drehung des Möbelkorpus nicht durcheinander gewürfelt. Die Röhre kann in ihrer Längsrichtung Trennelemente aufweisen, um eine Abtrennung verschiedener Stauraumfächer in der Stauraumröhre zu ermöglichen und eine ungewünschte Verlagerung der abgelegten Gegenstände in Röhrenlängsrichtung zu verhindern. Dies kann zum Beispiel von besonderem Vorteil bei einem Einbau des Multifunktionsmöbels in einem Fahrzeug sein, wobei die Längsrichtung der Stauraumröhre in eine Fahrzeuglängsrichtung zeigt. In diesem Fall wird bei Beschleunigungsvorgängen des Fahrzeugs eine Verlagerung der im Stauraum aufgenommenen Gegenstände sicher verhindert. Die Röhre kann eine sich über die gesamte Länge des Möbelkorpus erstreckende Röhre sein. Sie kann auch kürzer sein. Weiterhin können ebenso mehrere einzelne Stauraumröhren im Möbelkorpus angeordnet sein, um entsprechenden Stauraum zu schaffen.

Gemäß einer weiteren vorteilhaften Ausgestaltung der Erfindung ist an einer Unterseite der Röhre wenigstens ein Zusatzgewicht angebracht. Hierdurch kann die konstante Ausrichtung der Röhre bei einer Drehung des Möbelkorpus weiter verbessert werden, zum Beispiel, wenn sich keine Gegenstände in der Stauraumröhre befinden, so dass die den Zugang zum Röhreninnenraum bereitstellende Stauraumöffnung in der vorgesehenen Gebrauchsstellung der Funktionsfläche "Verstauen" stets gebrauchsfähig ausgerichtet ist. Selbstverständlich kann die Stauraumröhre zur Nutzung auch vom Nutzer zuerst in eine gewünschte Stellung gedreht werden. Es ist beispielsweise möglich, die Funktionsfläche mit dem Gebrauchszweck "Verstauen" somit in unterschiedlichen Gebrauchsstellungen, das heißt unterschiedlichen Winkelstellungen des Möbelkorpus, nutzbar zu machen. Zum Beispiel kann der Stauraum in einer ersten Gebrauchsstellung, in welcher die Funktionsfläche mit dem Gebrauchszweck "Verstauen" die Oberseite des Möbelkorpus bildet, oder in weiteren Gebrauchsstellungen, in denen die Funktionsfläche mit dem Gebrauchszweck "Verstauen" eine Vorder- und/oder Rückseite des Möbelkorpus bildet, verwendet werden.

Vorteilhafterweise kann die Funktionsfläche mit dem Gebrauchszweck "Kochen" dem Nutzer gemäß einer noch weiteren Ausgestaltung eine Spüle mit einer Frischwasserzufuhr und einer Brauchwasserentsorgung bereitstellen, wobei die Brauchwasserentsorgung ausgebildet und angeordnet ist, einen Rückfluss von Brauchwasser in die Spüle zu verhindern, das heißt ein Auslaufen bereits in einer Abflussleitung befindliches Brauchwasser bei einer anschließenden Drehung des Möbelkorpus sicher zu unterbinden. Beispielsweise kann eine solche Brauchwasserabflussleitung wendelförmig entlang einer gedachten Schraubenlinie derart innerhalb des Möbelkorpus geführt und angeordnet sein, dass eine Drehung des Möbelkorpus in eine vorgegebene Drehrichtung stets dazu führt, dass das Brauchwasser in der Abflussleitung von der Spüle wegfließt. In diesem Zusammenhang ist eine Einschränkung der Drehbarkeit des Möbelkorpus in lediglich eine einzige vorbestimmte Drehrichtung zusätzlich von Vorteil, wie bereits hierin an anderer Stelle erläutert wurde, um ein versehentliches Drehen in die entgegengesetzte Drehrichtung zu verhindern und damit den Nutzungskomfort des Multifunktionsmöbels für den Nutzer weiter zu erhöhen.

Zusätzlich oder alternativ zu der vorstehenden Windung einer Abflussleitung kann die Brauchwasserentsorgung eine Rückstauklappe und/oder eine Schneckenpumpe aufweisen, die einen unkontrollierten Rückfluss von Brauchwasser aus einer Abflussleitung sicher verhindert/verhindern. Beispielsweise kann eine serielle Anordnung der Rückstauklappe mit stromabwärtig angeordneter Schneckenpumpe (Archimedische Schraube) vorgesehen sein.

Gemäß einem weiteren Aspekt der Erfindung wird bei einem Verfahren zur Nutzung verschiedener, unterschiedlichen Gebrauchszwecken eines Nutzers dienenden Funktionen eines Multifunktionsmöbels, insbesondere eines Multifunktionsmöbels nach einer der hierin offenbarten Ausgestaltungen, das einen Möbelkorpus mit einer Außenfläche aufweist, wobei die Außenfläche in wenigstens vier verschiedene, den unterschiedlichen Gebrauchszwecken des Nutzers dienende Funktionsflächen eingeteilt wird, wobei jeder Funktionsfläche wenigstens eine vorbestimmte Gebrauchsstellung zugeordnet wird, in welcher die jeweilige Funktionsfläche entsprechend ihrem Gebrauchszweck von dem Nutzer bestimmungsgemäß genutzt werden kann. Weiter wird eine Drehachse des Möbelkorpus mittels wenigstens einem Aufhängungsmittel festgelegt, mittels welchem der Möbelkorpus an einem Möbelaufstellort beabstandet zu diesem um die Drehachse in räumlich horizontaler Ausrichtung drehbar gehalten wird und die jeweiligen Gebrauchsstellungen der verschiedenen Funktionsflächen durch Drehen des Möbelkorpus erreicht werden.

Nach der Erfindung wird der jeweilige Gebrauchszweck der Funktionsflächen ausgewählt aus der Gruppe enthaltend Arbeiten, Kochen, Verstauen, Schlafen, wobei dem Nutzer über die Funktionsfläche mit dem Gebrauchszweck "Arbeiten" wenigstens eine ebene Arbeitsfläche bereitgestellt wird, dem Nutzer über die Funktionsfläche mit dem Gebrauchszweck "Kochen" wenigstens eine Kochstelle zum Erwärmen von Nahrungsmitteln bereitgestellt wird, dem Nutzer über die Funktionsfläche mit dem Gebrauchszweck "Verstauen" wenigstens ein Stauraum zur Aufbewahrung von Gegenständen bereitgestellt wird und dem Nutzer über die Funktionsfläche mit dem Gebrauchszweck "Schlafen" wenigstens eine Liegefläche bereitgestellt wird.

Weiterhin wird gemäß der Erfindung mit Erreichen der der Funktionsfläche mit dem Gebrauchszweck "Kochen" zugeordneten Gebrauchsstellung gleichzeitig die der Funktionsfläche mit dem Gebrauchszweck "Verstauen" zugeordnete Gebrauchsstellung erreicht.

Es ist darauf hinzuweisen, dass bezüglich verfahrensbezogener Begriffsdefinitionen sowie der Wirkungen und Vorteile verfahrensgemäßer Merkmale vollumfänglich auf die Offenbarungen sinngemäßer Definitionen, Wirkungen und Vorteile bezüglich des hierin offenbarten erfindungsgemäßen Multifunktionsmöbels Bezug genommen und zurückgegriffen werden kann. Mit anderen Worten sollen Offenbarungen hierin bezüglich des erfindungsgemäßen Multifunktionsmöbels in sinngemäßer Weise ebenso zur Definition des erfindungsgemäßen Verfahrens herangezogen werden können, sofern dies nicht ausdrücklich ausgeschlossen ist. Ebenfalls sollen Offenbarungen hierin bezüglich des erfindungsgemäßen Verfahrens in sinngemäßer Weise zur Definition des erfindungsgemäßen Multifunktionsmöbels herangezogen werden können, sofern dies nicht ausdrücklich ausgeschlossen ist. Insofern kann auf eine Wiederholung von Erläuterungen sinngemäß gleicher Merkmale, deren Wirkungen und Vorteile des offenbarten erfindungsgemäßen Multifunktionsmöbels sowie des hierin offenbarten erfindungsgemäßen Verfahrens zugunsten einer kompakten Beschreibung grundsätzlich verzichtet werden, ohne dass derartige Auslassungen als Einschränkung auszulegen wären.

Nach einer vorteilhaften Weiterbildung der Erfindung wird wenigstens eine Versorgungsleitung für Strom-, Gas- und/oder Wasser durch eine sich in Richtung der Drehachse erstreckende Durchgangsöffnung im Aufhängungsmittel in den Möbelkorpus geleitet.

Eine weitere vorteilhafte Ausgestaltung sieht vor, dass das Aufhängungsmittel drehbar oder drehfest in wenigstens einer Haltestütze aufgenommen wird, mittels welcher das Aufhängungsmittel am Möbelaufstellort ortsfest und in dem vorbestimmten Abstand zu diesem gehalten wird.

Gemäß einer anderen vorteilhaften Ausgestaltung der Erfindung wird die Drehung des Möbelkorpus mittels einer Fixiervorrichtung wahlweise freigegeben oder unterbunden, wobei der Möbelkorpus mittels der Fixiervorrichtung zumindest in den einzelnen Gebrauchsstellungen der verschiedenen Funktionsflächen fixiert wird.

Zusätzlich kann in vorteilhafter Weiterbildung der Erfindung gemäß einer anderen Ausgestaltung die Drehung des Möbelkorpus mittels der Fixiervorrichtung stets nur in eine vorbestimmte Drehrichtung freigegeben werden.

In vorteilhafter Weiterbildung kann der Stauraum innerhalb des Möbelkorpus durch eine parallel zur Drehachse verlaufende, drehbar am Möbelkorpus gehaltene Röhre gebildet werden.

An einer Unterseite der Röhre kann optional wenigstens ein Zusatzgewicht angebracht werden, das bezüglich der Drehung der Röhre beabsichtigt eine Unwucht erzeugt.

Nach einer anderen bevorzugten Weiterbildung des Erfindungsgegenstands wird dem Nutzer über die Funktionsfläche mit dem Gebrauchszweck "Kochen" eine Spüle mit einer Frischwasserzufuhr und einer Brauchwasserentsorgung bereitgestellt, wobei ein Rückfluss von Brauchwasser aus der Brauchwasserentsorgung in die Spüle mittels einer Rückstauklappe und/oder eine Schneckenpumpe und/oder einer wendelförmig entlang einer gedachten Schraubenlinie geführten Brauchwasserabflussleitung verhindert wird.

Gemäß einem weiteren Aspekt der Erfindung wird ein Fahrzeug offenbart, insbesondere ein Kraftfahrzeug, das einen Fahrzeuginnenraum aufweist, in dem das Multifunktionsmöbel funktionsfähig angeordnet ist.

Das Fahrzeug kann zum Beispiel ein von einem Nutzer bewohnbares Fahrzeug (d. h. mit bewohnbarem Fahrzeuginnenraum) sein, zum Beispiel ein Reisemobil, Wohnmobil, Wohnwagen, Camping Van, Transporter, Bus, Reisebus und dergleichen.

Nach einer besonders bevorzugten Ausgestaltung der Erfindung ist die Drehachse des Möbelkorpus im Wesentlichen parallel zu einer Längsachse des Fahrzeugs ausgerichtet. So kann bei dem Längseinbau des Multifunktionsmöbels beispielsweise die Liegefläche mit einer für den Nutzer komfortablen Liegefläche bereitgestellt werden, die eine Länge im Bereich von vorzugsweise etwa 180 cm bis 220 cm beträgt, ohne jedoch zwingend hierauf beschränkt zu sein.

Ein Quereinbau des Multifunktionsmöbels in dem Fahrzeug, das heißt eine Ausrichtung der Drehachse des Möbelkorpus im Wesentlichen parallel zu einer Querachse des Fahrzeugs, ist ebenfalls denkbar. Hierzu kann zum Beispiel die Liegefläche seitliche Auszugelemente aufweisen, so dass in einem nicht genutzten Zustand der Funktionsfläche mit dem Gebrauchszweck "Schlafen" ausreichend Platz seitlich des Möbelkorpus zu Fahrzeugseitenwänden sichergestellt werden kann und die Liegefläche erst zur Nutzung seitlich durch die Auszugelemente vergrö-ßert werden kann, um die volle Breite des Fahrzeuginnenraums zu nutzen.

Es sei darauf hingewiesen, dass bezüglich fahrzeugbezogener Begriffsdefinitionen sowie der Wirkungen und Vorteile fahrzeuggemäßer Merkmale vollumfänglich auf die Offenbarungen sinngemäßer Definitionen, Wirkungen und Vorteile bezüglich des hierin offenbarten erfindungsgemäßen Multifunktionsmöbels Bezug genommen und zurückgegriffen werden kann. Mit anderen Worten sollen Offenbarungen hierin bezüglich des erfindungsgemäßen Multifunktionsmöbels in sinngemä-ßer Weise ebenso zur Definition des erfindungsgemäßen Fahrzeugs herangezogen werden können, sofern dies nicht ausdrücklich ausgeschlossen ist. Ebenfalls sollen Offenbarungen hierin bezüglich des erfindungsgemäßen Fahrzeugs in sinngemäßer Weise zur Definition des erfindungsgemäßen Multifunktionsmöbels herangezogen werden können, sofern dies nicht ausdrücklich ausgeschlossen ist. Insofern kann auf eine Wiederholung von Erläuterungen sinngemäß gleicher Merkmale, deren Wirkungen und Vorteile des offenbarten erfindungsgemäßen Multifunktionsmöbels sowie des hierin offenbarten erfindungsgemäßen Fahrzeugs zugunsten einer kompakten Beschreibung verzichtet werden, ohne dass derartige Auslassungen als Einschränkung auszulegen wären.

Gemäß einem noch weiteren Aspekt der Erfindung wird ebenso eine Verwendung eines Multifunktionsmöbels gemäß einer der hierin offenbarten Ausgestaltungen in einem Fahrzeuginnenraum eines Fahrzeugs, insbesondere eines Kraftfahrzeugs, gemäß den hierin ebenfalls offenbarten Ausgestaltungen offenbart. Das Fahrzeug ist besonders bevorzugt ein Fahrzeug mit bewohnbarem Fahrzeuginnenraum, in dem das Multifunktionsmöbel funktionsfähig angebracht ist, zum Beispiel ein Reisemobil, Wohnmobil, Wohnwagen, Camping Van, Transporter, Bus, Reisebus und dergleichen.

Es sei erneut erwähnt, dass bezüglich verwendungsbezogener Begriffsdefinitionen sowie der Wirkungen und Vorteile verwendungsgemäßer Merkmale vollumfänglich auf die Offenbarungen sinngemäßer Definitionen, Wirkungen und Vorteile bezüglich des hierin offenbarten erfindungsgemäßen Multifunktionsmöbels Bezug genommen und zurückgegriffen werden kann. Mit anderen Worten sollen Offenbarungen hierin bezüglich des erfindungsgemäßen Multifunktionsmöbels in sinngemäßer Weise ebenso zur Definition der erfindungsgemäßen Verwendung herangezogen werden können, sofern dies nicht ausdrücklich ausgeschlossen ist. Ebenfalls sollen Offenbarungen hierin bezüglich der erfindungsgemäßen Verwendung in sinngemäßer Weise zur Definition des erfindungsgemäßen Multifunktionsmöbels herangezogen werden können, sofern dies nicht ausdrücklich ausgeschlossen ist. Insofern kann auf eine Wiederholung von Erläuterungen sinngemäß gleicher Merkmale, deren Wirkungen und Vorteile des offenbarten erfindungsgemäßen Multifunktionsmöbels sowie der hierin offenbarten erfindungsgemäßen Verwendung in einem Fahrzeug zugunsten einer kompakten Beschreibung verzichtet werden, ohne dass derartige Auslassungen als Einschränkung auszulegen wären.

Weitere Merkmale und Vorteile der Erfindung ergeben sich aus der folgenden Beschreibung nicht einschränkend zu verstehender Ausführungsbeispiele der Erfindung, die im Folgenden unter Bezugnahme auf die Zeichnung näher erläutert wird. In dieser Zeichnung zeigen schematisch:
- Fig. 1: in einer perspektivischen Ansicht A ein Ausführungsbeispiel eines Multifunktionsmöbels gemäß der Erfindung mit einer ersten Funktionsfläche in ihrer Gebrauchsstellung in einem nicht genutzten Zustand und in einer perspektivischen Ansicht B in einem Nutzungszustand,
- Fig. 2: in Ansicht A eine Querschnittansicht des Multifunktionsmöbels aus Fig. 1 und in Ansicht B eine Längsseitenansicht des Multifunktionsmöbels aus Ansicht A,
- Fig. 3: in Ansicht A eine Querschnittansicht eines Multifunktionsmöbels, das nicht Teil der Erfindung ist, und in Ansicht B eine Längsseitenansicht des Multifunktionsmöbels aus Ansicht A,
- Fig. 4: in Ansicht A eine Draufsicht auf eine Stirnfläche des Multifunktionsmöbels aus Fig. 1 während einer elektromotorisch betriebenen Drehbewegung und in Ansicht B in einer fixierten Gebrauchsstellung,
- Fig. 5: in Ansicht A eine Draufsicht auf eine Stirnfläche eines noch weiteren Ausführungsbeispiels eines Multifunktionsmöbels gemäß der Erfindung während einer durch Muskelkraft betriebenen Drehbewegung und in Ansicht B in einer fixierten Gebrauchsstellung,
- Fig. 6: in einer perspektivischen Ansicht A das Multifunktionsmöbels aus Fig. 1 mit einer zweiten und dritten Funktionsfläche in ihren Gebrauchsstellungen in einem nicht genutzten Zustand und in einer perspektivischen Ansicht B in einem Nutzungszustand der dritten Funktionsfläche,
- Fig. 7: eine perspektivische Ansicht der zweiten Funktionsfläche aus Fig. 6 in einem ersten Nutzungszustand,
- Fig. 8: eine detaillierte Draufsicht auf die Stirnfläche des Multifunktionsmöbels aus Fig. 7 mit der zweiten Funktionsfläche in einem nicht genutzten Zustand,
- Fig. 9: eine perspektivische Ansicht der zweiten Funktionsfläche aus Fig. 7 in einem zweiten Nutzungszustand,
- Fig. 10: in einer perspektivischen Ansicht A das Multifunktionsmöbels aus Fig. 1 mit der dritten und einer vierten Funktionsfläche in ihren Gebrauchsstellungen in einem nicht genutzten Zustand und in einer perspektivischen Ansicht B in einem Nutzungszustand der dritten Funktionsfläche und
- Fig. 11: ein Ausführungsbeispiel eines erfindungsgemäßen Fahrzeugs gemäß der Erfindung sowie ein Ausführungsbeispiel für die erfindungsgemäße Verwendung eines Beispiels eines Multifunktionsmöbels gemäß der Erfindung in einem Fahrzeug.

In den unterschiedlichen Figuren sind hinsichtlich ihrer Funktion gleichwertige Teile stets mit denselben Bezugszeichen versehen, so dass diese in der Regel auch nur einmal beschrieben werden.

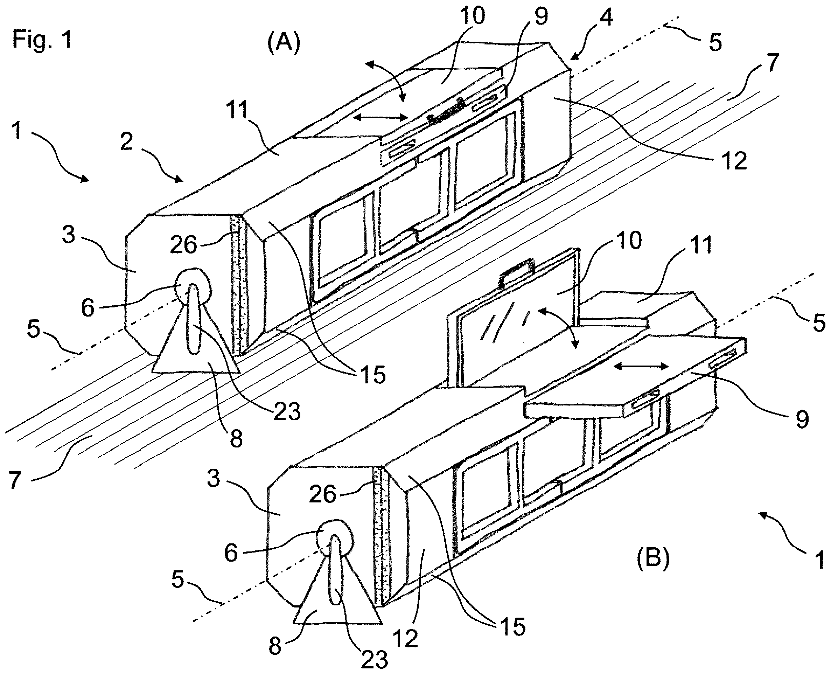

Fig. 1 stellt in einer perspektivischen Ansicht A ein Ausführungsbeispiel eines Multifunktionsmöbels 1 gemäß der Erfindung mit einer ersten Funktionsfläche 11 in ihrer Gebrauchsstellung in einem nicht genutzten Zustand und in einer perspektivischen Ansicht B die Funktionsfläche 2 in einem Nutzungszustand dar.

Das Multifunktionsmöbel 1 weist einen Möbelkorpus 2 auf, der eine im Wesentlichen geschlossene Außenfläche aufweist. Bei dem gezeigten Ausführungsbeispiel ist der Möbelkorpus 2 im Wesentlichen in Form eines Prismas mit einer Grundfläche 3, einer gegenüberliegenden Deckfläche 4 und mit einer die Grundfläche 2 mit der Deckfläche 3 verbindenden Mantelfläche ausgebildet ist, die die Außenfläche des Möbelkorpus bildet. Die Grundfläche 3 entspricht in dem dargestellten Beispiel einer ersten Stirnfläche des Möbelkorpus 2, die Deckfläche 4 einer zweiten (in Fig. 1 nicht sichtbaren) Stirnfläche des Möbelkorpus 2.

Die Außenfläche bzw. vorliegende die Mantelfläche des dargestellten Möbelkorpus 2 ist insgesamt vier verschiedene, unterschiedlichen Gebrauchszwecken eines nicht dargestellten Nutzers dienende Funktionsflächen 11, 12, 13, 14 eingeteilt, von denen in Fig. 1 zwei zu sehen sind.

Vorliegend ist der Funktionsfläche 11 der Gebrauchszweck "Arbeiten" zugeordnet, der Funktionsfläche 12 der Gebrauchszweck "Schlafen", der Funktionsfläche 13 der Gebrauchszweck "Verstauen" und der Funktionsfläche 14 der Gebrauchszweck "Kochen", wie nachstehend noch ausführlicher beschrieben wird. Zudem ist jeder Funktionsfläche 11, 12, 13, 14 wenigstens eine vorbestimmte Gebrauchsstellung zugeordnet, in welcher die jeweilige Funktionsfläche 11, 12, 13 bzw. 14 entsprechend ihrem Gebrauchszweck von dem Nutzer bestimmungsgemäß nutzbar ist. In Fig. 1 ist die vorliegend die Oberseite des Möbelkorpus bildende Funktionsfläche 11 in ihrer Gebrauchsstellung dargestellt.

Wie Fig. 1 weiter zu entnehmen ist, weist der Möbelkorpus 2 ein eine Drehachse 5 festlegendes Aufhängungsmittel 6 auf, das vorliegend als eine zwischen den zwei gegenüberliegenden Stirnflächen 3 und 4 des Möbelkorpus 2 verlaufende Welle ausgebildet ist, ohne jedoch zwingend hierauf beschränkt zu sein. Das Aufhängungsmittel 6 ist jedenfalls eingerichtet, den Möbelkorpus 2 an einem Möbelaufstellort 7, der in Fig. 1 beispielhaft als eine Bodenfläche veranschaulicht ist, ohne jedoch zwingend hierauf beschränkt zu sein (z. B. kann der Aufstellort ebenso durch Wände, eine Decke und dergleichen gebildet sein), beabstandet zum Aufstellort bzw. zur Bodenfläche 7 um die Drehachse 5 drehbar zu halten.

Fig. 1 ist zu entnehmen, dass die Drehachse 5 am Aufstellort 7 im Raum horizontal ausgerichtet gehalten ist. Wie hierin bereits an anderer Stelle erwähnt wurde, ist die Ausrichtung der Drehachse 5 am Aufstellort des Möbelkorpus 2 für den bestimmungs- und funktionsgemäßen Gebrauch des Multifunktionsmöbels 1 stets horizontal ausgerichtet. Es ist daher zu verstehen, dass auch bei einer Halterung des Möbelkorpus an oder zwischen zwei zur Bodenfläche 7 im Wesentlichen senkrecht verlaufenden Wänden (nicht dargestellt) die räumliche Ausrichtung der Drehachse 5 am Aufstellort weiterhin horizontal festgelegt ist.

Das Multifunktionsmöbel 1 weist in der in Fig. 1 dargestellten Ausführung zudem zwei Haltestützen 8 (z. B. Standböcke, Standbeine, Dreibeine etc., die am Aufstellort 7 aufstellbar bzw. befestigbar sind) auf, von denen in Fig. 1 nur die vordere, an der ersten Stirnfläche 3 angeordnete Haltestütze 8 zu sehen ist. Es ist jedoch zu verstehen, dass an der zweiten Stirnfläche 4 des Möbelkorpus 2 ebenfalls eine derartige Haltestütze 8 in gleicher Weise vorgesehen ist. Die Haltestützen 8 sind ausgebildet, das Aufhängungsmittel 6, das heißt vorliegend die Welle, drehbar oder drehfest aufzunehmen und am Möbelaufstellort 7 ortsfest und in dem vorbestimmten Abstand zu diesem zu halten. Im vorliegend gezeigten Ausführungsbeispiel des Multifunktionsmöbels 1 ist der Möbelkorpus 2 drehfest mit der Welle 6 verbunden, so dass die Haltestützen 8 die Welle 6 in diesem Fall jeweils drehbar aufnehmen und halten. Denkbar ist es ebenso, dass die Welle 6 den Möbelkorpus 2 drehbar lagert, so dass die Welle 6 drehfest in den Haltestützen 8 aufgenommen sein kann. Beim vorliegend dargestellten Multifunktionsmöbel 1 ist die Welle 6 zudem als Hohlwelle ausgebildet, ohne jedoch zwingend hierauf beschränkt zu sein.

Die Drehbarkeit des Möbelkorpus 2 am Aufstellort 7 ermöglicht es, dass wobei die jeweiligen Gebrauchsstellungen der verschiedenen Funktionsflächen 11, 12, 13, 14 durch Drehen des Möbelkorpus 2 erreichbar sind. Wie bereits erwähnt, befindet sich die Funktionsfläche 11 in Fig. 1 in ihrer oberseitigen Gebrauchsstellung. Der Gebrauchszweck "Arbeiten" der Funktionsfläche 11 stellt dem Nutzer eine ebene Arbeitsfläche 11 bereit, zum Beispiel nach Art einer freien Tischfläche. Bei dem in Fig. 1 gezeigten Multifunktionsmöbel 1 ist zudem ein Teil der Arbeitsfläche als aus dem Möbelkorpus 2 ausziehbare (s. Pfeildarstellung) Tischfläche 9 vorgesehen. Ansicht A stellt die Tischfläche 9 in einer in den Möbelkorpus 2 eingeschobenen Stellung dar, Ansicht B in der ausgezogenen Stellung. Außerdem weist die Funktionsfläche 11 vorliegend noch einen ebenfalls aus dem Möbelkorpus 2 schwenkbaren (s. Pfeildarstellung) und/oder ausziehbaren (s. ebenfalls Pfeildarstellung) Bildschirm oder Monitor 10 auf, ohne jedoch zwingend hierauf beschränkt zu sein. In Ansicht A ist der Bildschirm 10 in seiner eingeschwenkten Stellung dargestellt, in Ansicht B in der ausgeschwenkten Stellung. Der Bildschirm 10 kann zur Anzeige unterschiedlicher Inhalte ausgebildet sein. Beispielsweise kann der Bildschirm 10 ein TV-Bildschirm sein und/oder ein an einen nicht dargestellten Computer anschließbarer Computer-Monitor. Hierzu kann der Bildschirm 10 verschiedene Anschlussmöglichkeiten (nicht dargestellt), zum Beispiel Anschlüsse wie HDMI/HDMI mini, DisplayPort/DisplayPort mini, USB, Netzwerk etc. bereitstellen. Diese können beispielsweise an einer der Stirnflächen 3 bzw. 4 angeordnet und bereitgestellt sein und entsprechend durch den Innenraum des Möbelkorpus 2 zum Bildschirm 10 geführt sein. Die Anbringung der Anschlüsse an den Stirnflächen 3 und/oder 4 ermöglicht deren Nutzung auch bei eingeklapptem bzw. eingefahrenem Bildschirm 10 (z. B. zur Bereitstellung einer Ladefunktion über einen USB-Anschluss). Alternativ oder zusätzlich können die Anschlüsse auch am Bildschirmrand und/oder an einer Bildschirmrückwand angeordnet sein, so dass sie erst in ausgezogenem bzw. aufgeklapptem Zustand des Bildschirms zugänglich sind und ansonsten durch den Möbelkorpus 2 geschützt sind.

In Fig. 1 ist weiter zu erkennen, dass die Grundfläche 3 (und ebenso die nicht sichtbare Deckfläche 4) des vorliegend prismatisch ausgebildeten Möbelkorpus 2 in Form eines Polygons mit jeweils acht Ecken ausgebildet sind.

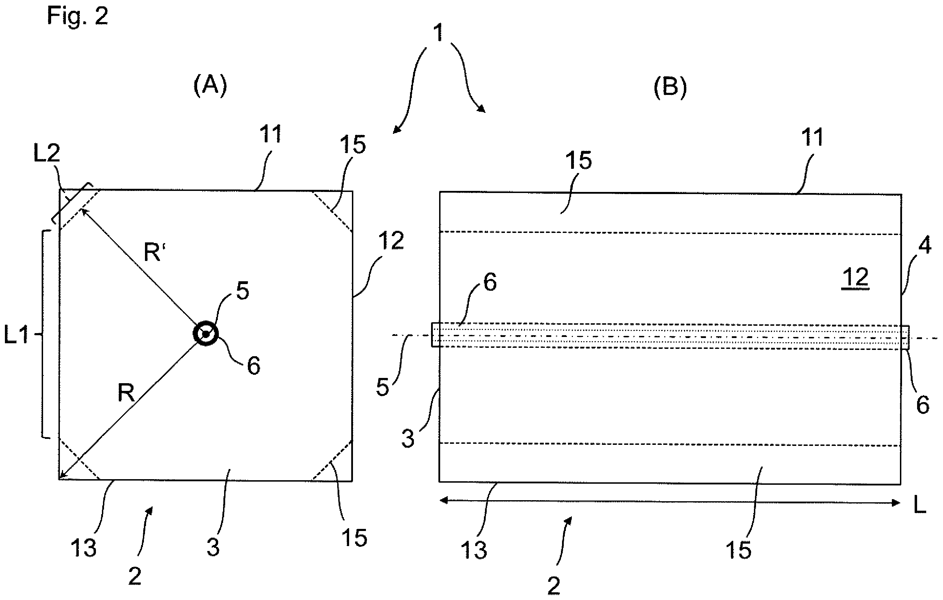

Fig. 2 stellt in Ansicht A eine Querschnittansicht des Multifunktionsmöbels 1 aus Fig. 1 und in Ansicht B eine Längsseitenansicht des Multifunktionsmöbels 1 aus Ansicht A dar. Es ist zu erkennen, dass das achteckige Polygon (umfassend die gestrichelten Linien) vier gleichlange Seiten einer ersten Länge L1 und vier gleichlange Seiten einer zweiten Länge L2 aufweist, wobei die zweite Länge L2 deutlich kürzer ist als die erste Länge L1.

Die erste, längere Länge L1 des Grundflächen- und Deckflächenpolygons bestimmt zusammen mit der Länge L des Möbelkorpus 2 die Nutzfläche der jeweiligen Funktionsfläche 11, 12, 13, 14. Die zweite, kürzere Länge L2 des Grundflächen- und Deckflächenpolygons stellt im Wesentlichen einen abgeschrägten Übergang 15 von einer Funktionsfläche zur nächsten Funktionsfläche bereit.

Durch die Abschrägung 15 wird die Nutzfläche der Funktionsflächen 11, 12, 13, 14 zwar geringfügig gegenüber einer Ausgestaltung mit unmittelbar aneinander angrenzenden Funktionsflächen ohne abgeschrägte Zwischenfläche 15 (vgl. durchgezogene Linien in Fig. 2, die das Grundflächenpolygon mit lediglich vier Ecken darstellen) verkleinert, jedoch vorteilhafterweise ebenso der für die Drehung des Möbelkorpus 2 zu berücksichtigende maximale Radius R, R' bzw. entsprechende Durchmesser. Der Möbelkorpus 2 mit abgeschrägten Zwischenflächen 15 baut kompakter und erfordert ein kleineres Volumen am Aufstellort 7. Zudem werden spitzzulaufende Stoßkanten aneinandergrenzender Funktionsflächen 11, 12, 13, 14 ohne Zwischenflächen 15 beim Möbelkorpus 2 gemäß der Ausgestaltung mit Zwischenflächen 15 vermieden.

In Ansicht B der Fig. 2 ist ebenfalls die bei dem vorliegenden Multifunktionsmöbel 1 als Hohlwelle ausgebildete Welle 6 zu erkennen, die sich von der ersten Stirnfläche 3 zur zweiten Stirnfläche 4 durch den Möbelkorpus 2 erstreckt.

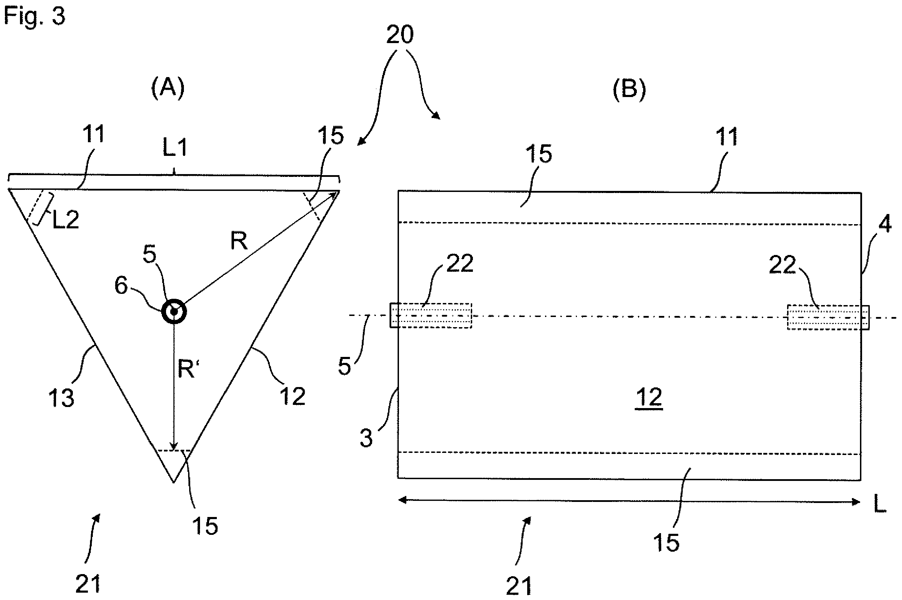

Fig. 3 stellt in Ansicht A eine Querschnittansicht eines Multifunktionsmöbels 20, das nicht Teil der Erfindung ist, mit einem Möbelkorpus 21 und in Ansicht B eine Längsseitenansicht des Multifunktionsmöbels 20 aus Ansicht A dar.

Ein wesentlicher Unterschied gegenüber dem Multifunktionsmöbel 1 aus Fig. 1, 2 ist, dass der Möbelkorpus 21 des in Fig. 3 dargestellten Multifunktionsmöbels 20 lediglich drei verschiedene Funktionsflächen, beispielsweise die Funktionsflächen 11, 12, 13, aufweist. Die Grundfläche 3 und Deckfläche 4 des ebenfalls prismatisch ausgebildeten Möbelkorpus 21 weisen eine polygonale Fläche mit jeweils drei (durchgezogene Linie) oder sechs Ecken (umfassend die gestrichelten Linien) auf. Im Fall des sechseckigen Polygons sind wiederum vier gleichlange Seiten einer ersten Länge L1 und vier gleichlange Seiten einer zweiten Länge L2 vorgesehen, wobei die zweite Länge L2 deutlich kürzer ist als die erste Länge L1.

Auch in dem in Fig. 3 dargestellten Ausführungsbeispiel bestimmt die erste, längere Länge L1 des Grundflächen- und Deckflächenpolygons zusammen mit der Länge L des Möbelkorpus 21 die Nutzfläche der jeweiligen Funktionsfläche 11, 12, 13. Die zweite, kürzere Länge L2 des Grundflächen- und Deckflächenpolygons stellt den abgeschrägten Übergang 15 von einer Funktionsfläche zur nächsten Funktionsfläche bereit. Durch die Abschrägung 15 wird die Nutzfläche der Funktionsflächen 11, 12, 13 zwar geringfügig gegenüber einer Ausgestaltung mit unmittelbar aneinander angrenzenden Funktionsflächen ohne abgeschrägte Zwischenfläche 15 (vgl. durchgezogene Linien in Fig. 3, die das Grundflächenpolygon mit lediglich drei Ecken darstellen) verkleinert, jedoch vorteilhafterweise ebenso der für die Drehung des Möbelkorpus 21 zu berücksichtigende maximale Radius R, R' bzw. entsprechende Durchmesser. Der Möbelkorpus 21 mit abgeschrägten Zwischenflächen 15 baut damit kompakter und erfordert ein kleineres Volumen am Aufstellort 7. Zudem werden spitzzulaufende Stoßkanten aneinandergrenzender Funktionsflächen 11, 12, 13 ohne Zwischenflächen 15 beim Möbelkorpus 21 mit Zwischenflächen 15 vermieden.

Ein weiterer Unterschied zum Möbelkorpus 2 der Fig. 2 ist die Ausbildung der Aufhängungsmittel 6. Beim Möbelkorpus 21 sind zwei Aufhängungsmittel 22 (eines an jeder Stirnfläche 3, 4) in Form von jeweiligen Wellenstücken vorgesehen. Die Wellenstücke 22 sind vorliegend ebenfalls jeweils als Hohlwellen ausgebildet, ohne jedoch zwingend hierauf beschränkt zu sein. Beide Wellenstücke 22 können als Vollwellen ausgebildet sein. Es kann auch eines der beiden Wellenstücke als Hohlwelle und das andere als Vollwelle ausgebildet sein.

Sowohl die mit einem Innendurchgang ausgebildete Welle 6 bzw. Hohlwelle des Multifunktionsmöbels 1 aus Fig. 1 und 2 als auch die mit einem Innendurchgang ausgebildeten Wellenstücke 22 bzw. Hohlwellenstücke des Multifunktionsmöbels 20 aus Fig. 3 sind zur Durchleitung wenigstens einer Versorgungsleitung (nicht dargestellt) für Strom-, Gas- und/oder Wasser in den Möbelkorpus 2 bzw. 21 eingerichtet.

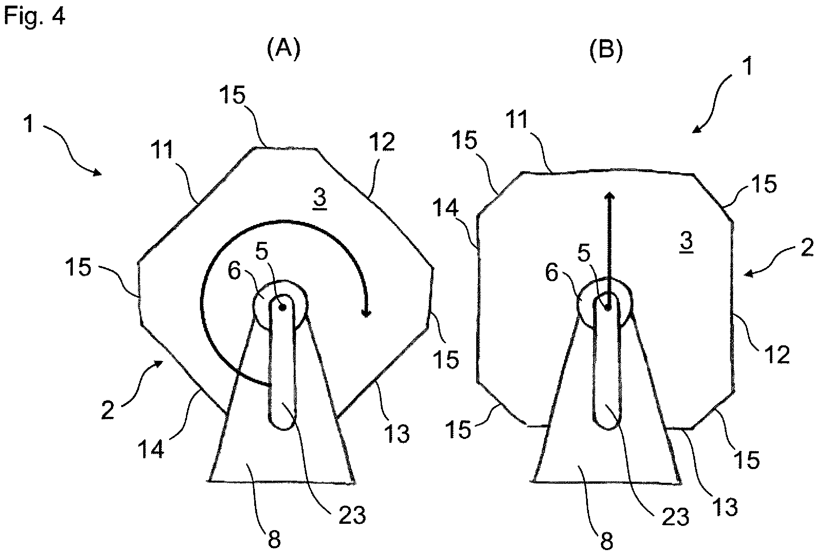

Fig. 4 stellt in Ansicht A eine Draufsicht auf die Stirnfläche 3 des Multifunktionsmöbels 1 aus Fig. 1 während einer elektromotorisch betriebenen Drehbewegung (Pfeildarstellung) und in Ansicht B in einer fixierten Gebrauchsstellung dar. Das Multifunktionsmöbel 1 weist für den elektromotorischen Antrieb einen an dem Aufhängungsmittel 6 bzw. vorliegend an der Welle 6 angreifenden Elektromotor 23 auf, der an der Haltestütze 8 als Widerlager befestigt ist. Zudem weist das Multifunktionsmöbel 1 eine Fixiervorrichtung (nicht dargestellt) auf, die die Drehung des Möbelkorpus 2 wahlweise freigibt oder unterbindet, wobei der Möbelkorpus 2 mittels der Fixiervorrichtung zumindest in den Gebrauchsstellungen der verschiedenen Funktionsflächen 11, 12, 13, 14 fixierbar ist (vgl. Ansicht B), um deren Nutzung durch den Nutzer komfortabel und in sicherer Weise zu ermöglichen.

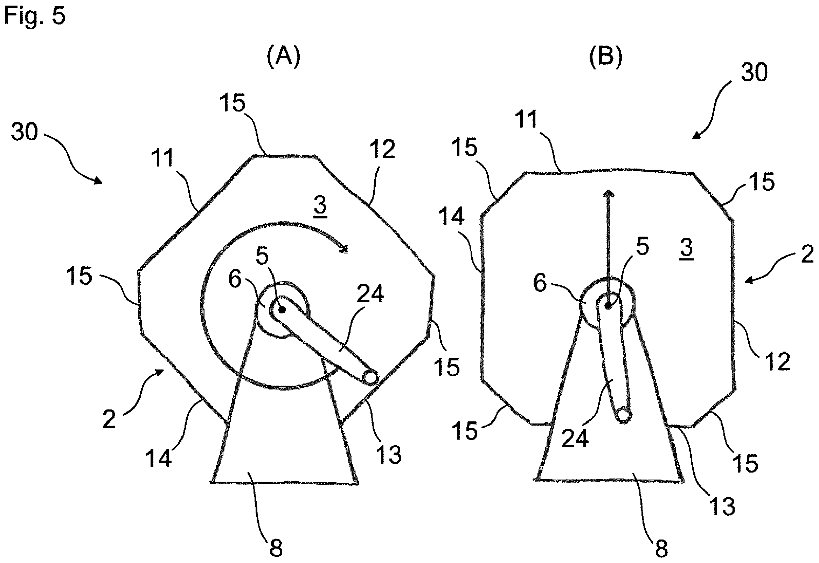

Fig. 5 stellt eine alternative Antriebsmöglichkeit zur Drehung eines Möbelkorpus 2 eines noch weiteren Ausführungsbeispiels eines Multifunktionsmöbels 30 gemäß der Erfindung dar. Insbesondere stellt Fig. 5 in Ansicht A eine Draufsicht auf eine Stirnfläche 3 des Multifunktionsmöbels 30 während einer durch Muskelkraft betriebenen Drehbewegung (Pfeildarstellung) und in Ansicht B in einer fixierten Gebrauchsstellung dar. Hierzu ist anstelle des in Fig. 4 gezeigten Elektromotors 23 des Multifunktionsmöbels 1 eine Handkurbel 24 vorgesehen, die ein durch den Nutzer an der Handkurbel 24 eingeleitetes Drehmoment auf ein Aufhängungsmittel 6, das vorliegend als (ggfs. hohle) Welle 6 ausgebildet sein kann, überträgt. Auch das Multifunktionsmöbel 30 weist eine Fixiervorrichtung (nicht dargestellt) auf, die die Drehung des Möbelkorpus 2 wahlweise freigibt oder unterbindet, wobei der Möbelkorpus 2 mittels der Fixiervorrichtung zumindest in den Gebrauchsstellungen der verschiedenen Funktionsflächen 11, 12, 13, 14 fixierbar ist (vgl. Ansicht B), um deren Nutzung durch den Nutzer komfortabel und in sicherer Weise zu ermöglichen

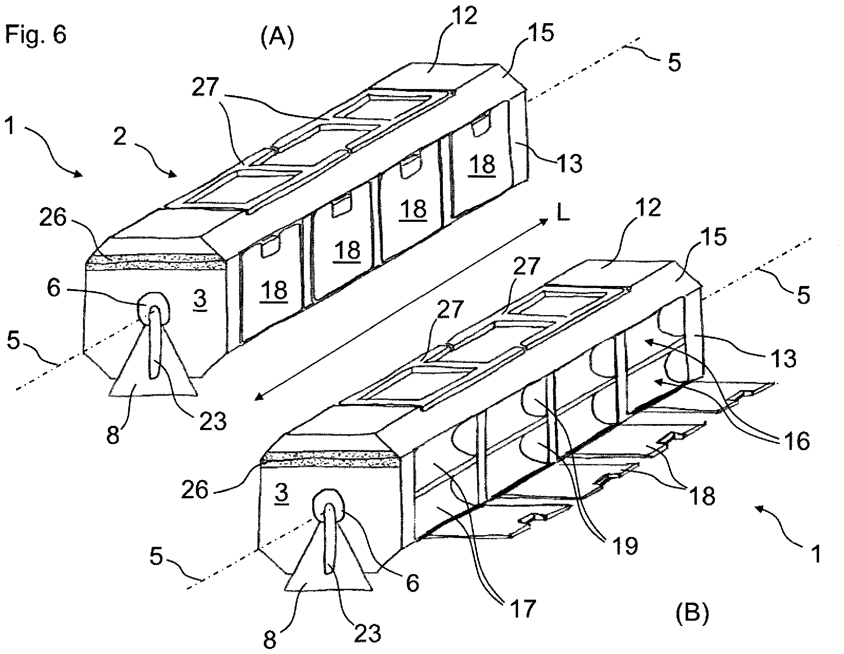

Fig. 6 stellt in einer perspektivischen Ansicht A das Multifunktionsmöbels 1 aus Fig. 1 mit der zweiten und dritten Funktionsfläche 12 bzw. 13 in ihren Gebrauchsstellungen in einem nicht genutzten Zustand und in einer perspektivischen Ansicht B in einem Nutzungszustand der dritten Funktionsfläche 13 dar.

Die Funktionsfläche 13 mit dem Gebrauchszweck "Verstauen" stellt dem Nutzer wenigstens einen Stauraum 16 zur Aufbewahrung von Gegenständen (nicht dargestellt) bereit, wie in Ansicht B zu erkennen ist. Der Stauraum 16 ist innerhalb des Möbelkorpus 2 vorliegend durch zwei parallel zur Drehachse 5 verlaufende, drehbar am Möbelkorpus 2 gehaltene Röhren 17 gebildet. Dies ist jedoch nicht zwingend erforderlich. Der Stauraum kann ebenso durch herkömmliche, unbewegliche Fächer bereitgestellt werden.

Die Stauraumröhren 17 erstrecken sich bei dem vorliegenden Ausführungsbeispiel über die gesamte Länge L des Möbelkorpus 2, ohne jedoch zwingend hierauf beschränkt zu sein. Der Stauraum 16 ist über entsprechende Stauraumöffnungen in den jeweiligen Röhren 17 zugänglich. Der Stauraum 16 ist zudem an der Außenfläche des Möbelkorpus 2 mittels (vorliegend vier) schwenkbarer Türen 18 verschließbar. Zudem sind die Stauraumröhren 17 in ihrer Längsrichtung entsprechend jeder Schwenktür 18 durch Trennwände 19 in mehrere Stauraumfächer unterteilt.

An ihren Unterseiten können die Röhren 17 Zusatzgewichte (nicht dargestellt) zur Stabilisierung ihrer Ausrichtung während einer Drehung des Möbelkorpus 2 aufweisen. Dies ist jedoch nicht zwingend erforderlich.

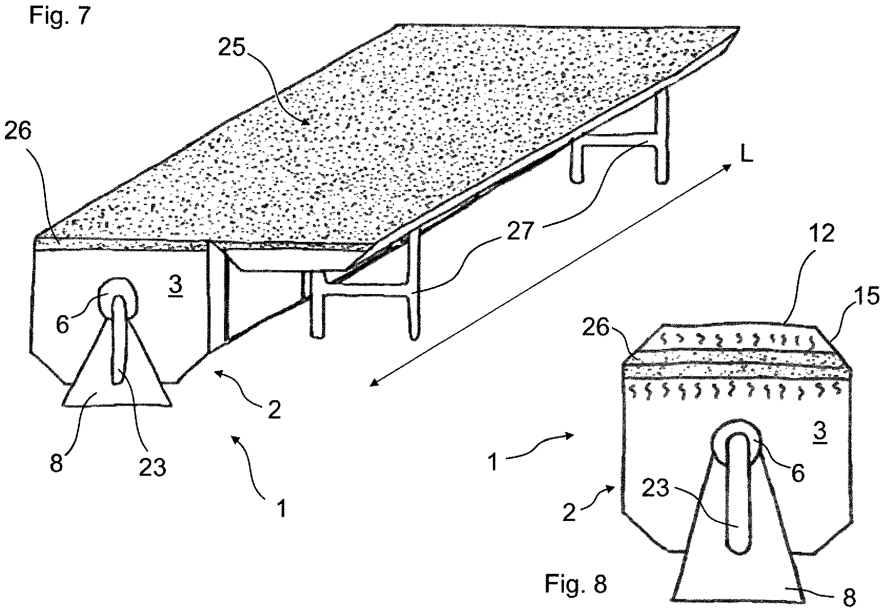

Wie bereits erwähnt, ist der Funktionsfläche 12 der Gebrauchszweck "Schlafen" zugeordnet. Die Funktionsfläche 12 stellt dem Nutzer eine Liegefläche 25, wie sie in Fig. 7 in einem (ausgeklappten) Nutzungszustand deutlich zu erkennen ist, bereit. In Fig. 6A ist die Liegefläche 25 in einem eingeklappten Zustand zu erkennen. Die Liegefläche 25 ist mit einer Liegeauflage 26, z. B. Matratze, belegt.

Fig. 7 stellt eine perspektivische Ansicht der zweiten Funktionsfläche 12 aus Fig. 6 in einem ersten Nutzungszustand dar. Es ist zu erkennen, dass der über den Möbelkorpus 2 ausgeklappte Teil der Liegefläche 25 mittels klappbarer Stützbeinen 27 am Aufstellort 7 abgestützt ist. In Fig. 6 sind die Stützbeine 27 in ihrer nicht genutzten Stellung platzsparend mit der Außenfläche des Möbelkorpus 2 fluchtend angeklappt.

Um den in Fig. 7 dargestellten Nutzungszustand mit alleiniger Nutzung der Liegefläche 25 zu erreichen, werden die Stützbeine 27 zum Beispiel in der in Fig. 6A dargestellten Stellung des Möbelkorpus 2 zunächst entriegelt. Es ist zu verstehen, dass die Stützbeine 27 in ihrer Nichtgebrauchsstellung in der in Fig. 6A dargestellten Stellung am Möbelkorpus 2 mittels einer entsprechenden Stützbeinverriegelung (nicht dargestellt) gesichert sind.

Für eine zusätzliche Erhöhung der Aufstellsicherheit können am Aufstellort bzw. der Bodenfläche 7 Metallkontaktflächen (nicht dargestellt) für die jeweiligen Stützbeine 27 vorgesehen sein, an welchen die Stützbeine 27 in ihrer ausgeklappten Stellung mit ihren freien, bodenseitigen Enden anliegen und optional in Eingriff gebracht werden können. Der Eingriff kann formschlüssig (z. B. Verrastung) oder nur kraftschlüssig, beispielsweise über eine Magnetkraft, Klemmkraft und dergleichen, hergestellt sein. Jedenfalls kann so ein versehentliches Umklappen der Stützbeine 27 während der Nutzung der Liegefläche 25 sicher verhindert werden.

Das Ausklappen der Liegefläche 25 kann nach Entriegelung der Stützbeine 27 erfolgen, indem beispielsweise zwei in entsprechenden Aussparungen versenkte Griffe (nicht dargestellt), z. B. Expandergriffe, von dem Nutzer gezogen werden, um die Liegefläche 25 ausgehend von der in Fig. 6A gezeigten eingeklappten Stellung öffnend auszuschwenken. Die Stützbeine 27 können ausgebildet und angeordnet sein, bei etwa 100 ° Öffnungswinkel der Liegefläche 25 automatisch auszuschwingen, um bei etwa 178 ° Öffnungswinkel der Liegefläche 25 mit den bodenseitigen Metallkontaktflächen in Eingriff zu gelangen.

Nach Erreichen des in Fig. 7 dargestellten, vollständig ausgeklappten Zustands der Liegefläche 25 können Haltegurte (nicht dargestellt), die die Matratze 26 halten, gelöst werden. Die Matratze 26 ist bevorzugt an Ihrer Unterseite am Möbelkorpus 2 mittels Klettband fixierbar, um ein Verrutschen zu verhindern. Bevorzugt kann die Klettbandfixierungsfunktion von einem die Matratze 26 umhüllenden Bezug bereitgestellt werden. Ferner kann zwischen der Matratze 26 ein Lattenrost (nicht dargestellt) angeordnet sein, um eine Belüftung der Matratze 26 zu gewährleisten. Kopfkissen und Bettdecke (beides nicht dargestellt) können ebenfalls mit einer Klett-Haltefunktion ausgestattet und entsprechend am Möbelkorpus 2 gehalten/befestigt sein.

Die in Fig. 7 dargestellte Liegefläche 25 kann beispielsweise eine Größe von 160 cm (oder 180 cm) x 200 cm aufweisen.

Fig. 8 stellt eine detaillierte Draufsicht auf die Stirnfläche 3 des Multifunktionsmöbels 1 aus Fig. 7 mit der zweiten Funktionsfläche 12 in dem nicht genutzten Zustand dar. In Fig. 8 ist zudem veranschaulicht, dass die Liegefläche 25 bzw. die Auflage 26 bei dem vorliegenden Ausführungsbeispiel beheizbar ist, ohne jedoch zwingend hierauf beschränkt zu sein. Die Beheizbarkeit der Liegefläche 25 bzw. Liegeauflage 26 bietet einen wesentlichen Vorteil bei der Verwendung des Multifunktionsmöbels 1 in einem bewohnbaren Fahrzeug bei niedrigen Umgebungstemperaturen, zum Beispiel im Winter.

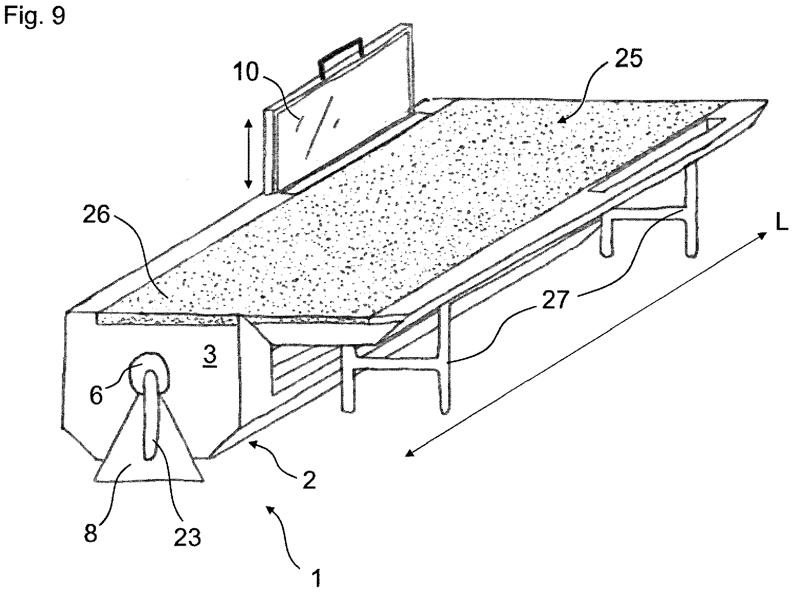

Fig. 9 stellt eine perspektivische Ansicht der zweiten Funktionsfläche 12 aus Fig. 7 in einem zweiten Nutzungszustand dar. Es ist zu erkennen, dass die Liegefläche 25 in vorteilhafter Weise gleichzeitig mit dem der ersten Funktionsfläche 11 zugeordneten Bildschirm 10 (z. B. TV-/Computer-Bildschirm) nutzbar ist. Hierzu kann der Bildschirm 10 aus der Funktionsfläche 11 herausgezogen werden (s. Pfeildarstellung in Fig. 1A) anstatt ausgeschwenkt (s. Fig. 1B) zu werden. Damit ist eine gleichzeitige Nutzung der ersten Funktionsfläche 11 und der zweiten Funktionsfläche 12 erzielbar. Wie bereits erwähnt, sind in der ausgezogenen Stellung des Bildschirms 10 von diesem bereitgestellte Anschlussmöglichkeiten, wie HDM, DisplayPort, USB und dergleichen, auch in der Liegefunktion nutzbar.

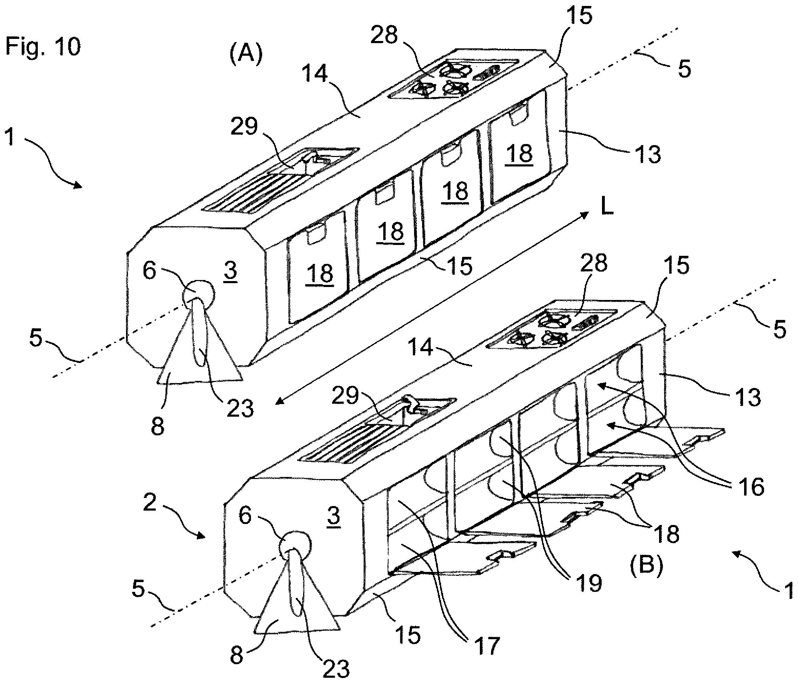

Fig. 10 stellt in einer perspektivischen Ansicht A das Multifunktionsmöbels 1 aus Fig. 1 mit der dritten und der vierten Funktionsfläche 13, 14 in ihren Gebrauchsstellungen in einem nicht genutzten Zustand und in einer perspektivischen Ansicht B in einem Nutzungszustand der dritten Funktionsfläche 13 dar. Die der Funktionsfläche 14 mit dem Gebrauchszweck "Kochen" zugeordnete Gebrauchsstellung entspricht damit der der Funktionsfläche 13 mit dem Gebrauchszweck "Verstauen" zugeordneten Gebrauchsstellung, da beide Gebrauchszwecke gleichzeitig in ein und derselben Winkelstellung des Möbelkorpus 2 genutzt werden können.

Fig. 10 ist zu entnehmen, dass die Funktionsfläche 14 dem Nutzer eine Kochstelle 28 zum Erwärmen von Nahrungsmitteln bereitstellt. Vorliegend ist die Kochstelle 28 als Gasherd ausgebildet. Ein Elektroherd ist ebenfalls denkbar. Außerdem stellt die Funktionsfläche 14 bei dem gezeigten Ausführungsbeispiel eine Spüle 29 mit einer Frischwasserzufuhr (nicht dargestellt) und einer Brauchwasserentsorgung (ebenfalls nicht dargestellt) bereit. Die Brauchwasserentsorgung ist ausgebildet und angeordnet, einen Rückfluss von Brauchwasser in die Spüle 29 zu verhindern, insbesondere bei einer Drehung des Möbelkorpus 2. Zu diesem Zweck kann die Brauchwasserentsorgung beispielsweise eine Rückstauklappe und/oder eine Schneckenpumpe (beides nicht dargestellt) aufweisen. Insbesondere kann es in diesem Zusammenhang auch vorteilhaft sein, die Fixiervorrichtung (nicht dargestellt) derart auszubilden, dass die Drehung des Möbelkorpus 2 stets nur in eine einzige vorbestimmte Drehrichtung möglich ist.

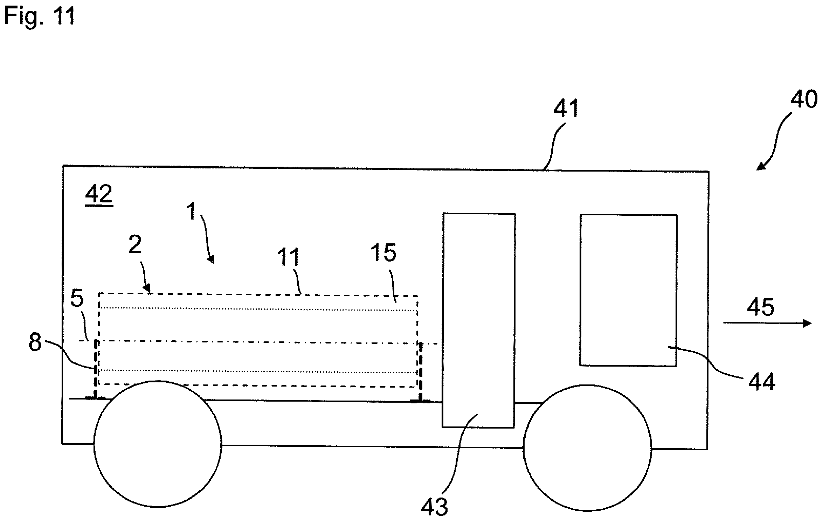

Fig. 11 stellt ein Ausführungsbeispiel eines Fahrzeugs 40 gemäß der Erfindung sowie ein Ausführungsbeispiel für die erfindungsgemäße Verwendung eines Beispiels eines Multifunktionsmöbels, z. B. das Multifunktionsmöbel 1 oder 20, gemäß der Erfindung in einem Fahrzeug, hier das Fahrzeug 40, dar. Das Fahrzeug 40 weist einen durch einen Fahrzeugaufbau 41 gebildeten Innenraum 42 auf, insbesondere einen durch einen Nutzer (nicht dargestellt) bewohnbaren Fahrzeuginnenraum. In dem Fahrzeuginnenraum 42 ist das Multifunktionsmöbel 1 funktionsfähig aufgestellt bzw. angebracht/befestigt. Der Innenraum 42 ist zum Beispiel über eine eigens hierfür vorgesehene Eingangstür 43 erreichbar, ohne jedoch zwingend hierauf beschränkt zu sein. Der Fahrzeuginnenraum 42 kann ebenso über die Fahrer- bzw. Beifahrertür 44 erreichbar sein, sofern das Führerhaus des Fahrzeugs 40 mit dem Fahrzeuginnenraum 42 durchgängig verbunden ist.

In Fig. 11 ist beispielhaft das in Fig. 1 gezeigte Multifunktionsmöbel 1 mit seiner Drehachse 5 parallel zur Fahrzeuglängsachse 45 (dementsprechend auch horizontal im Raum) ausgerichtet in dem Fahrzeuginnenraum 42 aufgestellt. Ein Quereinbau des Multifunktionsmöbels 1 in den Fahrzeuginnenraum 42 ist grundsätzlich ebenso möglich.

Vorliegend ist das Fahrzeug 40 beispielhaft ein Reisemobil wie z. B. Wohnmobil, Camping Van und dergleichen. Andere Arten von Fahrzeugen einschließlich Schienenfahrzeuge, Flugzeuge, Boote, Schiffe und dergleichen sind ebenfalls denkbar.

Das hierin offenbarte erfindungsgemäße Multifunktionsmöbel sowie das erfindungsgemäße Fahrzeug und die hierin offenbarte Verwendung desselben in einem Fahrzeug sind nicht auf die jeweils beschriebenen Ausführungsformen beschränkt, sondern umfassen jeweils auch gleich wirkende weitere Ausführungsformen, die sich aus technisch sinnvollen weiteren Kombinationen der hierin beschriebenen Merkmale des Funktionsmöbels sowie seiner Verwendung ergeben. Insbesondere sind die vorstehend in der allgemeinen Beschreibung und der Figurenbeschreibung genannten und/oder in den Figuren alleine gezeigten Merkmale und Merkmalskombinationen nicht nur in den jeweils hierin explizit angegebenen Kombinationen, sondern auch in anderen Kombinationen oder in Alleinstellung verwendbar, ohne den Rahmen der vorliegenden Erfindung zu verlassen.

In besonders bevorzugter Ausführung wird das erfindungsgemäße Multifunktionsmöbel in einem von einem Nutzer bewohnbaren Fahrzeuginnenraum eines Fahrzeugs, vorzugsweise Kraftfahrzeug wie Reisemobil, Wohnmobil, Wohnwagen, Camping Van, Transporter, Bus und dergleichen, verwendet. Die Erfindung ist jedoch nicht zwingend auf derartige Landfahrzeuge beschränkt, sondern beispielsweise ebenso in schienengebundenen Landfahrzeugen (z. B. Züge), Luftfahrzeugen (z. B. Flugzeuge) und Wasserfahrzeugen (z. B. Boote, Schiffe) verwendbar. Selbst eine Verwendung des Multifunktionsmöbels in stationären Einrichtungen wie Gebäuden, z. B. Hotels, Apartments und dergleichen, ist denkbar.

Bei der Verwendung des Multifunktionsmöbels in einem Fahrzeug ist die Drehachse des Möbelkorpus bevorzugt parallel zu einer Längsachse des Fahrzeugs ausgerichtet. Dies ermöglicht unter anderem die Bereitstellung und Nutzung einer von einem Nutzer nutzbaren Liegefläche, die bevorzugt eine Länge im Bereich von etwa 190 cm bis 220 cm und einer Breite im Bereich von etwa 80 cm bis 120 cm aufweist.

### Bezugszeichenliste

- 1: Multifunktionsmöbel
- 2: Möbelkorpus
- 3: Grundfläche / Erste Stirnfläche
- 4: Deckfläche / Zweite Stirnfläche
- 5: Drehachse
- 6: Aufhängungsmittel
- 7: Möbelaufstellort / Bodenfläche
- 8: Haltestütze
- 9: Ausziehbare Tischfläche
- 10: Bildschirm
- 11: Erste Funktionsfläche, Gebrauchszweck "Arbeiten", Arbeitsfläche
- 12: Zweite Funktionsfläche, Gebrauchszweck "Schlafen"
- 13: Dritte Funktionsfläche, Gebrauchszweck "Verstauen"
- 14: Vierte Funktionsfläche, Gebrauchszweck "Kochen"
- 15: Abgeschrägter Übergang / Zwischenfläche
- 16: Stauraum
- 17: Drehbare Röhre
- 18: Schwenktür
- 19: Trennwand
- 20: Multifunktionsmöbel
- 21: Möbelkorpus
- 22: Aufhängungsmittel
- 23: Elektromotor
- 24: Handkurbel
- 25: Liegefläche
- 26: Auflage
- 27: Stützbein
- 28: Kochstelle
- 29: Spüle
- 30: Multifunktionsmöbel
- 40: Fahrzeug
- 41: Fahrzeugaufbau
- 42: Fahrzeuginnenraum
- 43: Eingangstür
- 44: Fahrer-/Beifahrertür
- 45: Fahrzeuglängsachse

- L: Korpuslänge
- L1: Erste Länge
- L2: Zweite Länge
- R: Maximaler Radius ohne abgeschrägte Zwischenfläche
- R': Maximaler Radius mit abgeschrägter Zwischenfläche

## Patentansprüche

1. Multifunktionsmöbel (1, 20, 30), insbesondere für einen Einbau in einem Fahrzeug (40), zur Bereitstellung verschiedener, unterschiedlichen Gebrauchszwecken eines Nutzers dienenden Funktionen, aufweisend einen Möbelkorpus (2, 21) mit einer Außenfläche, wobei die Außenfläche in wenigstens vier verschiedene, den unterschiedlichen Gebrauchszwecken des Nutzers dienende Funktionsflächen (11, 12, 13, 14) eingeteilt ist, wobei jeder Funktionsfläche (11, 12, 13, 14) wenigstens eine vorbestimmte Gebrauchsstellung zugeordnet ist, in welcher die jeweilige Funktionsfläche (11, 12, 13, 14) entsprechend ihrem Gebrauchszweck von dem Nutzer bestimmungsgemäß nutzbar ist, und wenigstens ein Aufhängungsmittel (6, 22) vorgesehen ist, das ausgebildet und angeordnet ist, eine Drehachse (5) des Möbelkorpus (2, 21) festzulegen und den Möbelkorpus (2, 21) an einem Möbelaufstellort (7) beabstandet zu diesem um die Drehachse (5) in räumlich horizontaler Ausrichtung drehbar zu halten, wobei die jeweiligen Gebrauchsstellungen der verschiedenen Funktionsflächen (11, 12, 13, 14) durch Drehen des Möbelkorpus (2, 21) erreichbar sind,
**dadurch gekennzeichnet, dass**
der jeweilige Gebrauchszweck der Funktionsflächen (11, 12, 13, 14) ausgewählt ist aus der Gruppe enthaltend Arbeiten, Kochen, Verstauen, Schlafen, wobei die Funktionsfläche (11) mit dem Gebrauchszweck "Arbeiten" dem Nutzer wenigstens eine ebene Arbeitsfläche (9) bereitstellt, die Funktionsfläche (14) mit dem Gebrauchszweck "Kochen" dem Nutzer wenigstens eine Kochstelle (28) zum Erwärmen von Nahrungsmitteln bereitstellt, die Funktionsfläche (13) mit dem Gebrauchszweck "Verstauen" dem Nutzer wenigstens einen Stauraum (16) zur Aufbewahrung von Gegenständen bereitstellt und die Funktionsfläche (12) mit dem Gebrauchszweck "Schlafen" dem Nutzer wenigstens eine Liegefläche (25) bereitstellt, wobei die der Funktionsfläche (14) mit dem Gebrauchszweck "Kochen" zugeordnete Gebrauchsstellung der der Funktionsfläche (13) mit dem Gebrauchszweck "Verstauen" zugeordneten Gebrauchsstellung entspricht.

2. Multifunktionsmöbel (1, 20, 30) gemäß Anspruch 1,
**dadurch gekennzeichnet, dass**
der Möbelkorpus (1, 20, 30) im Wesentlichen in Form eines Prismas mit einer Grundfläche (3), einer gegenüberliegenden Deckfläche (4) und mit einer die Grundfläche (3) mit der Deckfläche (4) verbindenden Mantelfläche ausgebildet ist, wobei die Mantelfläche die in die verschiedenen Funktionsflächen (11, 12, 13, 14) aufgeteilte Außenfläche des Möbelkorpus (2, 21) bildet.

3. Multifunktionsmöbel (1, 20, 30) gemäß dem vorhergehenden Anspruch,
**dadurch gekennzeichnet, dass**
die Grundfläche (3) und die Deckfläche (4) des prismatisch ausgebildeten Möbelkorpus (2, 21) in Form eines Polygons mit jeweils drei oder vier Ecken ausgebildet sind.

4. Multifunktionsmöbel (1, 20, 30) gemäß dem vorvorhergehenden Anspruch,
**dadurch gekennzeichnet, dass**
die Grundfläche (3) und die Deckfläche (4) des prismatisch ausgebildeten Möbelkorpus (2, 21) in Form eines Polygons mit jeweils sechs Ecken oder acht Ecken ausgebildet sind, wobei das sechseckige und das achteckige Polygon jeweils drei bzw. vier gleichlange Seiten einer ersten Länge (L1) und drei bzw. vier gleichlange Seiten einer zweiten Länge (L2) kleiner als die erste Länge (L1) aufweisen.

5. Multifunktionsmöbel (1, 20, 30) gemäß einem der vorhergehenden Ansprüche,
**dadurch gekennzeichnet, dass**
das Aufhängungsmittel (6, 22) in Richtung der Drehachse (5) eine Durchgangsöffnung aufweist, die zur Durchleitung wenigstens einer Versorgungsleitung für Strom-, Gas- und/oder Wasser in den Möbelkorpus (2, 21) eingerichtet ist.

6. Multifunktionsmöbel (1, 20, 30) gemäß einem der vorhergehenden Ansprüche,
**dadurch gekennzeichnet, dass**
das Aufhängungsmittel (6, 22) als an zwei gegenüberliegenden Stirnflächen (3, 4) des Möbelkorpus (2, 21) jeweils vorgesehene Wellenstücke oder als eine zwischen den zwei gegenüberliegenden Stirnflächen (3, 4) des Möbelkorpus (2, 21) verlaufende Welle ausgebildet ist.

7. Multifunktionsmöbel (1, 20, 30) gemäß dem vorhergehenden Anspruch,
**dadurch gekennzeichnet, dass**
der Möbelkorpus (2, 21) drehfest mit den Wellenstücken (22) oder der Welle (6) verbunden ist.

8. Multifunktionsmöbel (1, 20, 30) gemäß einem der beiden vorhergehenden Ansprüche,
**dadurch gekennzeichnet, dass**
wenigstens eines der Wellenstücke (22), bevorzugt beide Wellenstücke, oder die Welle (6) zumindest eingangs- und/oder ausgangsseitig hohl ausgebildet ist/sind.

9. Multifunktionsmöbel (1, 20, 30) gemäß einem der vorhergehenden Ansprüche,
**dadurch gekennzeichnet, dass**
wenigstens eine Haltestütze (8) vorgesehen ist, die ausgebildet und angeordnet ist, das Aufhängungsmittel (6, 22) drehbar oder drehfest aufzunehmen und am Möbelaufstellort (7) ortsfest und in dem vorbestimmten Abstand zu diesem zu halten.

10. Multifunktionsmöbel (1, 20, 30) gemäß einem der vorhergehenden Ansprüche,
**dadurch gekennzeichnet, dass**
eine Fixiervorrichtung vorgesehen ist, die die Drehung des Möbelkorpus (2, 21) wahlweise freigibt oder unterbindet, wobei der Möbelkorpus (2, 21) mittels der Fixiervorrichtung zumindest in den einzelnen Gebrauchsstellungen der verschiedenen Funktionsflächen (11, 12, 13, 14) fixierbar ist.

11. Multifunktionsmöbel (1, 20, 30) gemäß dem vorhergehenden Anspruch,
**dadurch gekennzeichnet, dass**
die Fixiervorrichtung die Drehung des Möbelkorpus (2, 21) stets nur in eine vorbestimmte Drehrichtung freigibt.

12. Multifunktionsmöbel (1, 20, 30) gemäß einem der vorhergehenden Ansprüche,
**dadurch gekennzeichnet, dass**
die Funktionsfläche (1, 20, 30) mit dem Gebrauchszweck "Kochen" dem Nutzer eine Spüle (29) mit einer Frischwasserzufuhr und einer Brauchwasserentsorgung bereitstellt, wobei die Brauchwasserentsorgung ausgebildet und angeordnet ist, einen Rückfluss von Brauchwasser in die Spüle (29) zu verhindern.

13. Multifunktionsmöbel (1, 20, 30) gemäß dem vorhergehenden Anspruch,
**dadurch gekennzeichnet, dass**
die Brauchwasserentsorgung eine Rückstauklappe und/oder eine Schneckenpumpe und/oder eine wendelförmig entlang einer gedachten Schraubenlinie geführte Brauchwasserabflussleitung aufweist.

14. Verfahren zur Nutzung verschiedener, unterschiedlichen Gebrauchszwecken eines Nutzers dienenden Funktionen eines Multifunktionsmöbels (1, 20, 30), das einen Möbelkorpus (2, 21) mit einer Außenfläche aufweist, wobei die Außenfläche in wenigstens vier verschiedene, den unterschiedlichen Gebrauchszwecken des Nutzers dienende Funktionsflächen (11, 12, 13, 14) eingeteilt wird, wobei jeder Funktionsfläche (11, 12, 13, 14) wenigstens eine vorbestimmte Gebrauchsstellung zugeordnet wird, in welcher die jeweilige Funktionsfläche (11, 12, 13, 14) entsprechend ihrem Gebrauchszweck von dem Nutzer bestimmungsgemäß genutzt werden kann, und eine Drehachse (5) des Möbelkorpus (2, 21) mittels wenigstens einem Aufhängungsmittel (6, 22) festgelegt wird, mittels welchem der Möbelkorpus (2, 21) an einem Möbelaufstellort (7) beabstandet zu diesem um die Drehachse (5) in räumlich horizontaler Ausrichtung drehbar gehalten wird und die jeweiligen Gebrauchsstellungen der verschiedenen Funktionsflächen (11, 12, 13, 14) durch Drehen des Möbelkorpus (2, 21) erreicht werden,
**dadurch gekennzeichnet, dass**
der jeweilige Gebrauchszweck der Funktionsflächen (11, 12, 13, 14) ausgewählt wird aus der Gruppe enthaltend Arbeiten, Kochen, Verstauen, Schlafen, wobei dem Nutzer über die Funktionsfläche (11) mit dem Gebrauchszweck "Arbeiten" wenigstens eine ebene Arbeitsfläche (9) bereitgestellt wird, dem Nutzer über die Funktionsfläche (14) mit dem Gebrauchszweck "Kochen" wenigstens eine Kochstelle (28) zum Erwärmen von Nahrungsmitteln bereitgestellt wird, dem Nutzer über die Funktionsfläche (13) mit dem Gebrauchszweck "Verstauen" wenigstens ein Stauraum (16) zur Aufbewahrung von Gegenständen bereitgestellt wird und dem Nutzer über die Funktionsfläche (12) mit dem Gebrauchszweck "Schlafen" wenigstens eine Liegefläche (25) bereitgestellt wird, wobei mit Erreichen der der Funktionsfläche (14) mit dem Gebrauchszweck "Kochen" zugeordneten Gebrauchsstellung gleichzeitig die der Funktionsfläche (13) mit dem Gebrauchszweck "Verstauen" zugeordnete Gebrauchsstellung erreicht wird.

15. Fahrzeug (40), insbesondere Kraftfahrzeug, das einen Fahrzeuginnenraum (42) aufweist,
**dadurch gekennzeichnet, dass**
in dem Fahrzeuginnenraum (42) ein Multifunktionsmöbel (1, 20, 30) gemäß einem der Ansprüche 1 bis 13 funktionsfähig angeordnet ist.

16. Fahrzeug (40) gemäß dem vorhergehenden Anspruch,
**dadurch gekennzeichnet, dass**
die Drehachse (5) des Möbelkorpus (1, 20, 30) parallel zu einer Längsachse (45) des Fahrzeugs (40) ausgerichtet ist.

17. Fahrzeug (40) gemäß einem der beiden vorhergehenden Ansprüche,
**dadurch gekennzeichnet, dass**
das Fahrzeug (40) ein von einem Nutzer bewohnbares Fahrzeug ist, insbesondere ein Reisemobil, Wohnmobil, Wohnwagen, Camping Van, Transporter, Bus.

## Claims

1. Multifunctional piece of furniture (1, 20, 30), in particular for placement in a vehicle (40), for providing various functions which are used for different intended uses of a user, comprising a furniture body (2, 21) with an outer surface, wherein the outer surface is divided into at least four different functional surfaces (11, 12, 13, 14) which are used for the different intended uses of the user, wherein each functional surface (11, 12, 13, 14) is assigned at least one predetermined usage position, in which the respective functional surface (11, 12, 13, 14) can be used as intended by the user according to their intended use, and at least one suspension means (6, 22) is provided, which is configured and arranged to define an axis of rotation (5) of the furniture body (2, 21) and keep the furniture body (2, 21) rotatable about the axis of rotation (5) in a spatially horizontal orientation at a furniture placement location (7) at a distance therefrom, wherein the respective usage positions of the various functional surfaces (11, 12, 13, 14) can be reached by rotating the furniture body (2, 21),
**characterized in that**
the respective intended use of the functional surfaces (11, 12, 13, 14) is selected from the group containing working, cooking, storing, sleeping, wherein the functional surface (11) with the intended use "working" provides the user with at least one flat work surface (9), the functional surface (14) with the intended use "cooking" provides the user with at least one hotplate (28) for heating food, the functional surface (13) with the intended use "storing" provides the user with at least one storage space (16) for storing objects and the functional surface (12) with the intended use "sleeping" provides the user with at least one lying surface (25), wherein the usage position assigned to the functional surface (14) with the intended use "cooking" corresponds to the usage position assigned to the functional surface (13) with the intended use "storing".

2. Multifunctional piece of furniture (1, 20, 30) according to Claim 1,
**characterized in that**
the furniture body (1, 20, 30) is substantially configured in the form of a prism with a base surface (3), an opposite top surface (4) and with a lateral surface connecting the base surface (3) to the top surface (4), wherein the lateral surface forms the outer surface of the furniture body (2, 21) divided into the various functional surfaces (11, 12, 13, 14).

3. Multifunctional piece of furniture (1, 20, 30) according to the preceding claim,
**characterized in that**
the base surface (3) and the top surface (4) of the prismatic furniture body (2, 21) are configured in the form of a polygon, with three or four corners in each case.

4. Multifunctional piece of furniture (1, 20, 30) according to the preceding claim,
**characterized in that**
the base surface (3) and the top surface (4) of the prismatic furniture body (2, 21) are configured in the form of a polygon with six corners or eight corners in each case, wherein the hexagonal and the octagonal polygon each have three or four equal-length sides of a first length (L1) and three or four equal-length sides of a second length (L2) smaller than the first length (L1).

5. Multifunctional piece of furniture (1, 20, 30) according to one of the preceding claims,
**characterized in that**
the suspension means (6, 22) has a through-opening in the direction of the axis of rotation (5) which is adapted for the passage of at least one supply line for power, gas and/or water in the furniture body (2, 21) .

6. Multifunctional piece of furniture (1, 20, 30) according to one of the preceding claims,
**characterized in that**
the suspension means (6, 22) is configured as shaft pieces provided on two opposite end faces (3, 4) of the furniture body (2, 21) or as one shaft running between the two opposite end faces (3, 4) of the furniture body (2, 21).

7. Multifunctional piece of furniture (1, 20, 30) according to the preceding claim,
**characterized in that**
the furniture body (2, 21) is non-rotatably connected to the shaft pieces (22) or the shaft (6).

8. Multifunctional piece of furniture (1, 20, 30) according to one of the two preceding claims,
**characterized in that**
at least one of the shaft pieces (22), preferably both shaft pieces, or the shaft (6) is/are configured to be hollow at least on the input and/or output side.

9. Multifunctional piece of furniture (1, 20, 30) according to one of the preceding claims,
**characterized in that**
at least one support (8) is provided which is configured and arranged to accommodate the suspension means (6, 22) in a rotatable or non-rotatable manner and to hold this in a fixed position and at a predetermined distance from this at the furniture placement location (7).

10. Multifunctional piece of furniture (1, 20, 30) according to one of the preceding claims,
**characterized in that**
a fixing device is provided which selectively enables or prevents the rotation of the furniture body (2, 21), wherein the furniture body (2, 21) can be fixed by means of the fixing device at least in the individual usage positions of the various functional surfaces (11, 12, 13, 14).

11. Multifunctional piece of furniture (1, 20, 30) according to the preceding claim,
**characterized in that**
the fixing device always releases the rotation of the furniture body (2, 21) only in a predetermined direction of rotation.

12. Multifunctional piece of furniture (1, 20, 30) according to one of the preceding claims,
**characterized in that**
the functional surface (1, 20, 30) with the intended use "cooking" provides the user with a sink (29) with a fresh water supply and a service water disposal, wherein the service water disposal is configured and arranged to prevent a backflow of service water into the sink (29).

13. Multifunctional piece of furniture (1, 20, 30) according to the preceding claim,
**characterized in that**
the service water disposal has a non-return valve and/or a worm pump and/or a service water drain line guided helically along an imaginary helix.

14. Method for using various functions of a multifunctional piece of furniture (1, 20, 30) serving different intended uses of a user, which has a furniture body (2, 21) with an outer surface, wherein the outer surface is divided into at least four different functional surfaces (11, 12, 13, 14) serving the different intended uses of the user, wherein each functional surface (11, 12, 13, 14) is assigned at least one predetermined usage position, in which the respective functional surface (11, 12, 13, 14) can be used as intended by the user according to their intended use, and an axis of rotation (5) of the furniture body (2, 21) is fixed by means of at least one suspension means (6, 22), by means of which the furniture body (2, 21) is held rotatably about the axis of rotation (5) in a spatially horizontal orientation at a furniture placement location (7) at a distance therefrom, and the respective usage positions of the various functional surfaces (11, 12, 13, 14) are reached by rotating the furniture body (2, 21),
**characterized in that**
the respective intended use of the functional surfaces (11, 12, 13, 14) is selected from the group containing working, cooking, storing, sleeping, wherein the user is provided with at least one flat work surface (9) via the functional surface (11) with the intended use "working", the user is provided with at least one hotplate (28) for heating food via the functional surface (14) with the intended use "cooking", the user is provided with at least one storage space (16) for storing objects via the functional surface (13) with the intended use "storing" and the user is provided with at least one lying surface (25) via the functional surface (12) with the intended use "sleeping", wherein on reaching the usage position assigned to the functional surface (14) with the intended use "cooking", the usage position assigned to the functional surface (13) with the intended use "storing" is reached simultaneously.

15. Vehicle (40), in particular motor vehicle, which has a vehicle interior (42),
**characterized in that**
a multifunctional piece of furniture (1, 20, 30) according to one of Claims 1 to 13 is functionally arranged in the vehicle interior (42).

16. Vehicle (40) according to the preceding claim,
**characterized in that**
the axis of rotation (5) of the furniture body (1, 20, 30) is aligned parallel to a longitudinal axis (45) of the vehicle (40).

17. Vehicle (40) according to one of the two preceding claims,
**characterized in that**
the vehicle (40) is a vehicle that can be lived in by a user, in particular a motor home, camper van, caravan, camping van, van, bus.

## Revendications

1. Meuble multifonctionnel (1, 20, 30), notamment destiné à être intégré dans un véhicule (40), pour la mise à disposition de diverses fonctions, servant à différents usages par un utilisateur, comportant un corps de meuble (2, 21) doté d'une surface extérieure, la surface extérieure étant divisée en au moins quatre surfaces fonctionnelles (11, 12, 13, 14) diverses, servant aux différents usages de l'utilisateur, à chaque surface fonctionnelle (11, 12, 13, 14) étant associée au moins une position opérationnelle prédéfinie, dans laquelle la surface fonctionnelle (11, 12, 13, 14) concernée est utilisable de manière conforme, en correspondance avec son usage par l'utilisateur et au moins un moyen d'accrochage (6, 22) étant prévu, qui est conçu et placé pour déterminer un axe de rotation (5) du corps de meuble (2, 21) et pour maintenir le corps de meuble (2, 21) en un endroit d'implantation (7) du meuble, avec un écart par rapport à celui-ci, de manière rotative autour de l'axe de rotation (5) en orientation horizontale dans l'espace, les positions opérationnelles concernées des diverses surfaces fonctionnelles (11, 12, 13, 14) étant susceptibles d'être obtenues par une rotation du corps de meuble (2, 21),
**caractérisé en ce que**
l'usage respectif des surfaces fonctionnelles (11, 12, 13, 14) est sélectionné dans le groupe comprenant le travail, la cuisson, le rangement, le sommeil, la surface fonctionnelle (11) à usage de travail mettant à la disposition de l'utilisateur au moins un plan de travail (9) plat, la surface fonctionnelle (14) à usage de « cuisson » mettant à la disposition de l'utilisateur au moins une plaque de cuisson (28), destinée à chauffer des produits alimentaires, la surface fonctionnelle (13) à usage de « rangement » mettant à la disposition de l'utilisateur au moins un espace de rangement (16) pour la conservation d'objets et la surface fonctionnelle (12) à usage de « sommeil » mettant à la disposition de l'utilisateur au moins une surface de couchage (25), la position opérationnelle associée à la surface fonctionnelle (14) à usage de « cuisson » correspondant à la position opérationnelle associée à la surface fonctionnelle (13) à usage de « rangement ».

2. Meuble multifonctionnel (1, 20, 30) selon la revendication 1,
**caractérisé en ce que**
le corps de meuble (1, 20, 30) est conçu sensiblement sous la forme d'un prisme, doté d'une surface de base (3), d'une surface de recouvrement (4) placée au vis-à-vis et d'une surface enveloppante reliant la surface de base (3) avec la surface de recouvrement (4), la surface enveloppante constituant la surface extérieure du corps de meuble (2, 21) divisée dans les diverses surfaces fonctionnelles (11, 12, 13, 14).

3. Meuble multifonctionnel (1, 20, 30) selon la revendication précédente,
**caractérisé en ce que**
la surface de base (3) et la surface de recouvrement (4) du corps de meuble (2, 21) conçu de forme prismatique est conçue sous la forme d'un polygone, avec chaque fois trois ou quatre angles.

4. Meuble multifonctionnel (1, 20, 30) selon la revendication pré-précédente,
**caractérisé en ce que**
la surface de base (3) et la surface de recouvrement (4) du corps de meuble (2, 21) conçu de forme prismatique sont conçues sous la forme d'un polygone, avec chaque fois six angles ou huit angles, le polygone hexagonal ou octogonal comportant respectivement trois ou quatre côtés de même longueur, d'une première longueur (L1) et trois ou quatre côté de même longueur, d'une deuxième longueur (L2) inférieure à la première longueur (L1).

5. Meuble multifonctionnel (1, 20, 30) selon l'une quelconque des revendications précédentes,
**caractérisé en ce que**
le moyen d'accrochage (6, 22) comporte dans la direction de l'axe de rotation (5) un orifice de passage, qui est configuré pour tirer à travers lui au moins une conduite d'alimentation de courant électrique, de gaz et / ou d'eau dans le corps de meuble (2, 21).

6. Meuble multifonctionnel (1, 20, 30) selon l'une quelconque des revendications précédentes,
**caractérisé en ce que**
le moyen d'accrochage (6, 22) est conçu sous la forme de deux pièces ondulées, prévues chacune sur deux faces frontales (3, 4) situées en vis-à-vis du corps de meuble (2, 21) ou sous la forme d'une onde s'écoulant entre les deux faces frontales (3, 4) situées en vis-à-vis du corps de meuble (2, 21).

7. Meuble multifonctionnel (1, 20, 30) selon la revendication précédente,
**caractérisé en ce que**
le corps de meuble (2, 21) est relié de manière solidaire en rotation avec les pièces ondulées (22) ou avec l'onde (6).

8. Meuble multifonctionnel (1, 20, 30) selon l'une quelconque des deux revendications précédentes,
**caractérisé**
**en ce qu'**au moins l'une des pièces ondulées (22), de préférence les deux pièces ondulées ou l'onde (6) sont conçues de forme creuse, au moins du côté entrée et / ou du côté sortie.

9. Meuble multifonctionnel (1, 20, 30) selon l'une quelconque des revendications précédentes,
**caractérisé**
**en ce qu'**il est prévu au moins un support de maintien (8) qui est conçu et placé pour recevoir le moyen d'accrochage (6, 22) de manière rotative ou solidaire en rotation et pour le maintenir à l'endroit d'implantation (7) du meuble de manière stationnaire et avec l'écart prédéfini par rapport à celui-ci.

10. Meuble multifonctionnel (1, 20, 30) selon l'une quelconque des revendications précédentes,
**caractérisé**
**en ce qu'**il est prévu un dispositif de fixation qui libère ou évite sélectivement la rotation du corps de meuble (2, 21), le corps de meuble (2, 21) étant susceptible d'être fixé au moyen du dispositif de fixation au moins dans les positions opérationnelles individuelles des diverses surfaces fonctionnelles (11, 12, 13, 14).

11. Meuble multifonctionnel (1, 20, 30) selon la revendication précédente,
**caractérisé en ce que**
le dispositif de fixation ne libère toujours la rotation du corps de meuble (2, 21) que dans une seule direction de rotation prédéfinie.

12. Meuble multifonctionnel (1, 20, 30) selon l'une quelconque des revendications précédentes,
**caractérisé en ce que**
la surface fonctionnelle (1, 20, 30) à usage de « cuisson » met à la disposition de l'utilisateur un évier (29) pourvu d'une arrivée d'eau fraîche et d'une évacuation d'eau usée, l'évacuation d'eau usée étant conçue et placée pour empêcher un reflux d'eau usée dans l'évier (29).

13. Meuble multifonctionnel (1, 20, 30) selon la revendication précédente,
**caractérisé en ce que**
l'évacuation d'eau usée comporte un clapet antiretour et / ou une pompe à vis et / ou une conduite d'évacuation d'eau usée guidée en forme d'hélice le long d'une ligne hélicoïdale.

14. Procédé, destiné à utiliser diverses fonctions, servant à différents usages par un utilisateur d'un meuble multifonctionnel (1, 20, 30), qui comporte un corps de meuble (2, 21) doté d'une surface extérieure, lors duquel l'on divise la surface extérieure en au moins quatre surfaces fonctionnelles (11, 12, 13, 14) diverses, servant aux différents usages par l'utilisateur, lors duquel l'on associe à chaque surface fonctionnelle (11, 12, 13, 14) au moins une position opérationnelle prédéfinie, dans laquelle la surface fonctionnelle (11, 12, 13, 14) peut être utilisée de manière conforme, en correspondance avec son usage par l'utilisateur, et l'on détermine un axe de rotation (5) du corps de meuble (2, 21) à l'aide d'au moins einem moyen d'accrochage (6, 22), à l'aide duquel le corps de meuble (2, 21) est maintenu en un endroit d'implantation (7) du meuble, avec un écart par rapport à celui-ci, en étant rotatif autour de l'axe de rotation (5) dans une orientation horizontale dans l'espace et l'on atteint les positions opérationnelles respectives des diverses surfaces fonctionnelles (11, 12, 13, 14) par rotation du corps de meuble (2, 21),
**caractérisé en ce que**
l'on sélectionne l'usage respectif des surfaces fonctionnelles (11, 12, 13, 14) dans la groupe comprenant le travail, la cuisson, le rangement, le sommeil, par la surface fonctionnelle (11) à usage de « travail » étant mis à la disposition de l'utilisateur au moins un plan de travail (9) plat, par la surface fonctionnelle (14) à usage de « cuisson » étant mise à la disposition de l'utilisateur au moins une plaque de cuisson (28), destinée à chauffer des produits alimentaires, par la surface fonctionnelle (13) à usage de « rangement » étant mis à la disposition de l'utilisateur au moins un espace de rangement (16), pour la conservation d'objets et par la surface fonctionnelle (12) à usage de « sommeil », étant mise à la disposition de l'utilisateur au moins une surface de couchage (25), à l'atteinte de la position opérationnelle associée à la surface fonctionnelle (14) à usage de « cuisson », étant atteinte simultanément la position opérationnelle associée à la surface fonctionnelle (13) à usage de « rangement ».

15. Véhicule (40), notamment véhicule automobile, qui comporte un habitacle de véhicule (42),
**caractérisé en ce que**
dans l'habitacle de véhicule (42), un meuble multifonctionnel (1, 20, 30) selon l'une quelconque des revendications 1 à 13 est placé de manière fonctionnelle.

16. Véhicule (40) selon la revendication précédente,
**caractérisé en ce que**
l'axe de rotation (5) du corps de meuble (1, 20, 30) est orienté à la parallèle d'un axe longitudinal (45) du véhicule (40).

17. Véhicule (40) selon l'une quelconque des deux revendications précédentes,
**caractérisé en ce que**
le véhicule (40) est un véhicule habitable par l'utilisateur, notamment un camping-car, un mobil home, une caravane, un van aménagé, un transporteur, un bus.
